(19) Europäisches Patentamt
European Patent Office
Office européen des brevets

(11) **EP 4 372 034 A1**

(12) **EUROPEAN PATENT APPLICATION**

(43) Date of publication:
**22.05.2024 Bulletin 2024/21**

(21) Application number: **23207524.2**

(22) Date of filing: **02.11.2023**

(51) International Patent Classification (IPC):
***C08J 5/18*** *(2006.01)* ***C08G 73/10*** *(2006.01)*
***C08G 73/14*** *(2006.01)* ***C08L 79/08*** *(2006.01)*

(52) Cooperative Patent Classification (CPC):
**C08J 5/18; C08G 73/1039; C08G 73/1042; C08G 73/14;** C08J 2379/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.11.2022 KR 20220154841**

(71) Applicant: **SK microworks Co., Ltd.**
**Suwon-si, Gyeonggi-do 16336 (KR)**

(72) Inventors:
- **KIM, Han Jun**
  **16336 Suwon-si (KR)**
- **LEE, Jin Yong**
  **16336 Suwon-si (KR)**
- **LEE, Jin Woo**
  **16336 Suwon-si (KR)**

(74) Representative: **Dehns**
**St. Bride's House**
**10 Salisbury Square**
**London EC4Y 8JD (GB)**

(54) **POLYAMIDE-IMIDE-BASED FILM, PROCESS FOR PREPARING THE SAME, AND COVER WINDOW AND DISPLAY DEVICE COMPRISING THE SAME**

(57) The embodiments aim to provide a polyamide-imide-based film that has a TGA weight loss area value (TDA) of 0.01% min/°C or less and is excellent in mechanical properties, optical properties, and the suitability for post-processing, a process for preparing the same, and a cover window and a display device comprising the same.

Fig. 1

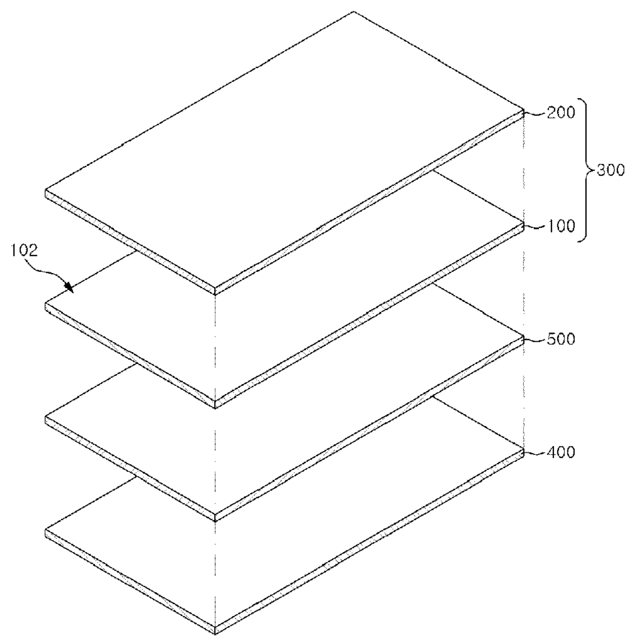




Processed by Luminess, 75001 PARIS (FR)

## Description

### Technical Field

Embodiments relate to a polyamide-imide-based film, to a process for preparing the same, and to a cover window and a display device comprising the same.

### Background Art

Polyimide-based resins such as poly(amide-imide) (PAI) are excellent in resistance to friction, heat, and chemicals. Thus, they are employed in such applications as primary electrical insulation, coatings, adhesives, resins for extrusion, heat-resistant paintings, heat-resistant boards, heat-resistant adhesives, heat-resistant fibers, and heat-resistant films.

Polyimide is used in various fields. For example, polyimide is made in the form of a powder and used as a coating for a metal or a magnetic wire. It is mixed with other additives depending on the applications thereof. In addition, polyimide is used together with a fluoropolymer as a painter for decoration and corrosion prevention. It also plays a role of bonding a fluoropolymer to a metal substrate. Further, polyimide is used to coat kitchenware, used as a membrane for gas separation by virtue of its heat resistance and chemical resistance, and used in natural gas wells for filtration of such contaminants as carbon dioxide, hydrogen sulfide, and impurities.

In recent years, polyimide has been developed in the form of a film, which is less expensive and has excellent optical, mechanical, and thermal characteristics. Such a polyimide-based film may be applied to display materials for organic light-emitting diodes (OLEDs) or liquid crystal displays (LCDs), and the like, and to antireflection films, compensation films, and retardation films if retardation properties are implemented.

When a functional layer such as a hard coating layer is laminated on such a polyimide-based film, there is a problem in that the functional layer is detached from the film, or the mechanical and optical properties of the film are deteriorated when it is immersed in a solvent in a post-process. Accordingly, the demand for the development of films with excellent mechanical properties, optical properties, and suitability for post-processing is continuously increasing.

### Detailed Description of the Invention

### Technical Problem

The embodiments aim to provide a polyamide-imide-based film excellent in mechanical properties, optical properties, and suitability for post-processing, a process for preparing the same, and a cover window and a display device comprising the same.

### Solution to the Problem

The polyamide-imide-based film according to an embodiment has a TGA weight loss area value (TDA) of 0.01% min/°C or less.

The cover window for a display device according to another embodiment comprises a polyamide-imide-based film and a functional layer, wherein the polyamide-imide-based film has a TGA weight loss area value (TDA) of 0.01% min/°C or less.

The display device according to another embodiment comprises a display unit; and a cover window disposed on the display unit, wherein the cover window comprises a polyamide-imide-based film and a functional layer, and the polyamide-imide-based film has a TGA weight loss area value (TDA) of 0.01% min/°C or less.

The process for preparing the polyamide-imide-based film according to an embodiment comprises polymerizing a diamine compound, a dianhydride compound, and a dicarbonyl compound in an organic solvent to prepare a polyamide-imide-based polymer solution; casting the solution to prepare a gel sheet; and thermally treating the gel sheet.

### Advantageous Effects of the Invention

As the polyamide-imide-based film according to the embodiment has a TGA weight loss area value (TDA) adjusted to 0.01%·min/°C or less, it is excellent in optical properties and mechanical properties, as well as the suitability for post-processing such as adhesion to a functional layer and solvent resistance.

Once the polyamide-imide-based film has been prepared, it is subjected to a post-process such as a process in which a functional layer is laminated for imparting functions such as anti-fingerprint, antistatic, scattering prevention, and adhesion enhancement and/or it is immersed in a solvent.

There is a possibility that the functional layer may be detached from the film after the post-process, or the optical and mechanical properties may deteriorate such as a steep increase in haze after the solvent immersion. Thus, the suitability for post-processing, such as solvent resistance and adhesion to a functional layer, plays an important role in the quality reliability of final products.
As the polyamide-imide-based film according to the embodiment has a TGA weight loss area value (TDA) adjusted to a specific range, the quality reliability and product yield of a final product such as a cover window for a display device or a display device to which the film has been applied can be enhanced.

## Brief Description of the Drawings

Fig. 1 is a schematic exploded view of a display device according to an embodiment.
Fig. 2 is a schematic perspective view of a display device according to an embodiment.
Fig. 3 is a schematic cross-sectional view of a display device according to an embodiment.
Fig. 4 is a schematic flow diagram of a process for preparing a polyamide-imide-based film according to an embodiment.
Fig. 5 is a schematic flow diagram of the step of thermally treating a gel sheet in a process for preparing a polyamide-imide-based film according to an embodiment.
Fig. 6 shows the evaluation criteria for a cross-cut test according to ASTM D3359 Method B.

## Best Mode for Carrying Out the Invention

Hereinafter, the embodiments will be described in detail with reference to the accompanying drawings so that those skilled in the art to which the present invention pertains may easily practice them. However, the embodiments may be implemented in many different ways and are not limited to those described herein.
Throughout the present specification, in the case where each film, window, panel, layer, or the like is mentioned to be formed "on" or "under" another film, window, panel, layer, or the like, it means not only that one element is directly formed on or under another element, but also that one element is indirectly formed on or under another element with other element(s) interposed between them. In addition, the term on or under with respect to each element may be referenced to the drawings. For the sake of description, the sizes of individual elements in the appended drawings may be exaggeratedly depicted and do not indicate the actual sizes. In addition, the same reference numerals refer to the same elements throughout the specification.
Throughout the present specification, when a part is referred to as "comprising" an element, it is understood that other elements may be comprised, rather than other elements are excluded, unless specifically stated otherwise.
In the present specification, a singular expression is interpreted to cover a singular or plural number that is interpreted in context unless otherwise specified.
In addition, all numbers and expressions related to the quantities of components, reaction conditions, and the like used herein are to be understood as being modified by the term "about," unless otherwise indicated.
The terms first, second, and the like are used herein to describe various elements, and the elements should not be limited by the terms. The terms are used only for the purpose of distinguishing one element from another.
In addition, the term "substituted" as used herein means to be substituted with at least one substituent group selected from the group consisting of deuterium, -F, -Cl, -Br, -I, a hydroxyl group, a cyano group, a nitro group, an amino group, an amidino group, a hydrazine group, a hydrazone group, an ester group, a ketone group, a carboxyl group, a substituted or unsubstituted alkyl group, a substituted or unsubstituted alkenyl group, a substituted or unsubstituted alkynyl group, a substituted or unsubstituted alkoxy group, a substituted or unsubstituted alicyclic organic group, a substituted or unsubstituted heterocyclic group, a substituted or unsubstituted aryl group, and a substituted or unsubstituted heteroaryl group. The substituent groups enumerated above may be connected to each other to form a ring.

## Polyamide-imide-based film

An embodiment provides a polyamide-imide-based film that has a TGA weight loss area value (TDA) satisfying a specific range, whereby it is excellent in not only thermal resistance and yellow index but also the suitability for post-processing such as solvent resistance and adhesion to a functional layer.
The polyamide-imide-based film according to an embodiment has a TGA weight loss area value (TDA) of 0.01%·min/°C or less.
Specifically, the TGA weight loss area value (TDA) of the polyamide-imide-based film may be 0.009 % min/°C or less, 0.008 % min/°C or less, 0.007 % min/°C or less, 0.006 %·min/°C or less, 0.005 %·min/°C or less, 0.004 %·min/°C

or less, 0.003 %·min/°C or less, 0.0022 %·min/°C or less, or 0.002 %·min/°C or less, and 0.0001 %·min/°C or more, 0.0002 %·min/°C or more, 0.0003 %·min/°C or more, 0.0004 %·min/°C or more, 0.0005 %·min/°C or more, 0.0006 %·min/°C or more, 0.0007 %·min/°C or more, 0.0008 %·min/°C or more, 0.0009 %·min/°C or more, or 0.001 % ·min/°C or more.

More specifically, the TGA weight loss area value (TDA) of the polyamide-imide-based film may be 0.0001 to 0.01 % min/°C, 0.0001 to 0.008 % min/°C, 0.0001 to 0.006 %·min/°C, 0.0001 to 0.004 %·min/°C, 0.0001 to 0.003 %·min/°C, 0.0001 to 0.0022 %·min/°C, 0.0001 to 0.002 %·min/°C, 0.0005 to 0.01 %·min/°C, 0.0005 to 0.008 %·min/°C, 0.0005 to 0.006 %·min/°C, 0.0005 to 0.004 %·min/°C, 0.0005 to 0.003 %·min/°C, 0.0005 to 0.0022 %·min/°C, 0.0005 to 0.002 %·min/°C, 0.0008 to 0.01 %·min/°C, 0.0008 to 0.008 %·min/°C, 0.0008 to 0.006 %·min/°C, 0.0008 to 0.004 %·min/°C, 0.0008 to 0.003 %·min/°C, 0.0008 to 0.0022 %·min/°C, 0.0008 to 0.002 %.minJ°C, 0.001 to 0.01 %·min/°C, 0.001 to 0.008 %·min/°C, 0.001 to 0.006 %·min/°C, 0.001 to 0.004 %·min/°C, 0.001 to 0.003 %·min/°C, 0.001 to 0.0022 %·min/°C, or 0.001 to 0.002 %·min/°C, but it is not limited thereto.

In a TGA analysis, the first weight loss temperature (Tw) refers to the temperature at which the weight loss change rate is the largest in the temperature range of 270°C to 330°C. In addition, in a graph of weight loss change rate (y-axis) with respect to temperature (x-axis), when a straight line is drawn to connect the point corresponding to the temperature of (Tw - 30)°C and the point corresponding to the temperature of (Tw + 30)°C, the area of the section in which the first weight loss temperature (Tw) is present among the areas between the straight line and the graph refers to the TGA weight loss area value (TDA).

The TGA analysis may be carried out using a thermal gravimetric analysis Q500 model of TA by taking 2 g of a measurement sample of a polyamide-imide-based film and heating it at a rate of 10°C/minute in the range of 25°C to 700°C.

As the TGA weight loss area value (TDA) of the polyamide-imide-based film is controlled to the above range, optical and mechanical properties are excellent, and, when it is subjected to a post-process such as a process for laminating a functional layer, the adhesion to a functional layer is enhanced, whereby the phenomenon of delamination between layers when it is applied to a product can be significantly reduced. In addition, it has excellent solvent resistance as its physical properties are not deteriorated even after being immersed in a solvent commonly used in a post-process.

In contrast, if the TGA weight loss area value (TDA) of the polyamide-imide-based film is outside the above range, the adhesion to a functional layer is poor, and optical properties such as yellow index may be deteriorated after immersion in a solvent, resulting in a decrease in quality reliability of a film. Further, when a product is manufactured using the film, the defect rate of the product may be high.

The polyamide-imide film may have a first weight loss temperature (Tw) of 285°C or higher in a TGA analysis.

Specifically, the first weight loss temperature (Tw) of the polyamide-imide-based film in a TGA analysis may be 290°C or higher, 293°C or higher, 295°C or higher, 298°C or higher, or 300°C or higher, and 330°C or lower, 325°C or lower, 320°C or lower, 315°C or lower, 312°C or lower, 310°C or lower, or 308°C or lower.

More specifically, the first weight loss temperature (Tw) of the polyamide-imide-based film in a TGA analysis may be 280°C to 330°C, 280°C to 320°C, 280°C to 315°C, 280°C to 310°C, 290°C to 330°C, 290°C to 320°C, 290°C to 315°C, 290°C to 310°C, 295°C to 330°C, 295°C to 320°C, 295°C to 315°C, or 295°C to 310°C, but it is not limited thereto.

If the first weight loss temperature (Tw) of the polyamide-imide-based film satisfies the above range, the adhesion to a functional layer and the suitability for post-processing such as solvent resistance may be improved.

In an embodiment, the polyamide-imide-based film may have a 1% weight loss temperature (Tdl) of 290°C or higher in a TGA analysis.

Specifically, the 1% weight loss temperature (Tdl) of the polyamide-imide-based film in a TGA analysis may be 295°C or higher, 300°C or higher, 305°C or higher, or 310°C or higher, and 360°C or lower, 355°C or lower, 350°C or lower, 345°C or lower, or 340°C or lower.

More specifically, the 1% weight loss temperature (Tdl) of the polyamide-imide-based film in a TGA analysis may be 280°C to 360°C, 280°C to 350°C, 280°C to 345°C, 280°C to 340°C, 290°C to 360°C, 290°C to 350°C, 290°C to 345°C, 290°C to 340°C, 300°C to 360°C, 300°C to 350°C, 300°C to 345°C, 300°C to 340°C, 310°C to 360°C, 310°C to 350°C, 310°C to 345°C, or 310°C to 340°C, but it is not limited thereto.

For example, when 2 g of a measurement sample of a polyamide-imide-based film is taken and heated at a rate of 10°C/minute in the range of 25°C to 700°C using a thermal gravimetric analysis Q500 model of TA, the 1% weight loss temperature (Tdl) may refer to the temperature at which 1% weight loss occurs.

In an embodiment, the polyamide-imide-based film may have a 5% weight loss temperature (Td5) of 400°C or higher in a TGA analysis.

Specifically, the 5% weight loss temperature (Td5) of the polyamide-imide-based film in a TGA analysis may be 405°C or higher, 410°C or higher, 415°C or higher, 420°C or higher, 425°C or higher, or 430°C or higher, and 470°C or lower, 460°C or lower, 455°C or lower, 450°C or lower, 445°C or lower, or 440°C or lower.

More specifically, the 5% weight loss temperature (Td5) of the polyamide-imide-based film in a TGA analysis may be 400°C to 470°C, 400°C to 460°C, 400°C to 450°C, 400°C to 440°C, 410°C to 470°C, 410°C to 460°C, 410°C

to 450°C, 410°C to 440°C, 420°C to 470°C, 420°C to 460°C, 420°C to 450°C, 420°C to 440°C, 430°C to 470°C, 430°C to 460°C, 430°C to 450°C, or 430°C to 440°C, but it is not limited thereto.

For example, when 2 g of a measurement sample of a polyamide-imide-based film is taken and heated at a rate of 10°C/minute in the range of 25°C to 700°C using a thermal gravimetric analysis Q500 model of TA, the 5% weight loss temperature (Td5) may refer to the temperature at which 5% weight loss occurs.

If the 1% weight loss temperature (Tdl) and the 5% weight loss temperature (Td5) of the polyamide-imide-based film each satisfy the above ranges, the residual content of solvents in the film is low, and the optical and mechanical properties of the film can be improved.

The polyamide-imide-based film may have an adhesion to a functional layer of 4B or more or 5B.

The functional layer may be at least one selected from the group consisting of a hard coating layer, a reflectance reducing layer, an antifouling layer, and an antiglare layer, but it is not limited thereto.

In an embodiment, a primer layer may be interposed between the functional layer and the polyamide-imide film.

Specifically, the polyamide-imide-based film may have an adhesion to a hard coating layer of 4B or more. More specifically, the polyamide-imide-based film may have an adhesion to a hard coating layer of 5B.

For example, the adhesion to a hard coating layer may be a value measured by applying a primer layer composition onto the polyamide-imide-based film to form a primer layer with a thickness of 0.1 μm, applying a hard coating layer composition onto the primer layer to form a hard coating layer with a thickness of 5 μm, cutting the surface of the hard coating layer in the form of a grid in regular intervals according to the ASTM D 3359 (Method B) standard, and attaching and removing a tape (Nitto Tape 50B) on it to check the extent to which grid flakes are detached from the surface.

Here, the hard coating layer may comprise at least one of an organic component, an inorganic component, and an organic-inorganic composite component as a hard coating agent. As an example, the hard coating layer may comprise an organic resin. Specifically, the organic resin may be a curable resin. Thus, the hard coating layer may be a curable coating layer.

Specifically, the hard coating layer may comprise at least one selected from the group consisting of a urethane acrylate-based compound, an acrylic ester-based compound, and an epoxy acrylate-based compound. More specifically, the hard coating layer may comprise a urethane acrylate-based compound and an acrylic ester-based compound.

When the polyamide-imide-based film is immersed in MIBK for 5 seconds and dried at 80°C for 3 minutes, the amount of change in haze ($\Delta Hz_M$) may be 0.5% or less when its haze is measured.

Specifically, the amount of change in haze ($\Delta Hz_M$) of the polyamide-imide-based film after it is immersed in MIBK may be 0.4% or less, 0.3% or less, 0.2% or less, 0.15% or less, or 0.1% or less, but it is not limited thereto.

$\Delta Hz_M$ (%) is a value of $Hz_M$ - $Hz_0$, in which $Hz_0$ stands for the initial haze (%) of the film, and $Hz_M$ stands for the haze (%) measured after the film is immersed in an MIBK solvent for 5 seconds and dried at 80°C for 3 minutes.

When the polyamide-imide-based film is immersed in IPA for 5 seconds and dried at 80°C for 3 minutes, the amount of change in haze ($\Delta Hz_I$) may be 0.3% or less when its haze is measured.

Specifically, the amount of change in haze ($\Delta Hz_I$) of the polyamide-imide-based film after it is immersed in IPA may be 0.2% or less, 0.15% or less, 0.1% or less, or 0.08% or less, but it is not limited thereto.

$\Delta Hz_I$ (%) is a value of $Hz_I$ - $Hz_0$, in which $Hz_0$ stands for the initial haze (%) of the film, and $Hz_I$ stands for the haze (%) measured after the film is immersed in an IPA solvent for 5 seconds and dried at 80°C for 3 minutes.

The average value ($\Delta Hz_{AVG}$) of the amount of change in haze ($\Delta Hz_M$) of the polyamide-imide-based film after it is immersed in MIBK for 5 seconds and dried at 80°C for 3 minutes and the amount of change in haze ($\Delta Hz_I$) of the polyamide-imide-based film after it is immersed in IPA for 5 seconds and dried at 80°C for 3 minutes may be 0.4% or less.

Specifically, the average value ($\Delta Hz_{AVG}$) of the amounts of change in haze of the polyamide-imide-based film may be 0.3% or less, 0.2% or less, 0.15% or less, 0.12% or less, 0.1% or less, 0.09% or less, or 0.08% or less, but it is not limited thereto.

The average value ($\Delta Hz_{AVG}$) of the amounts of change in haze may be a measure for determining the solvent resistance of a film.

In an embodiment, the polyamide-imide-based film may have a surface tension of a first side of 40 dyn/cm or more.

Specifically, the surface tension of the first side of the polyamide-imide-based film may be 43 dyn/cm or more, 45 dyn/cm or more, 46 dyn/cm or more, or 47 dyn/cm or more, and 55 dyn/cm or less, 53 dyn/cm or less, 52 dyn/cm or less, 51 dyn/cm or less, or 50 dyn/cm or less.

In an embodiment, the first side may be an air side of the film. The air side refers to a side that does not come into contact with a support used in forming a polyamide-imide-based film. Specifically, in the process for preparing the film, the air side may refer to a side that does not come into contact with a belt on which the polyamide-imide-based polymer solution is cast and dried.

In an embodiment, the polyamide-imide-based film may have a surface tension of a second side of 40 dyn/cm or more.

Specifically, the surface tension of the second side of the polyamide-imide-based film may be 43 dyn/cm or

more, 45 dyn/cm or more, 46 dyn/cm or more, or 47 dyn/cm or more, and 55 dyn/cm or less, 53 dyn/cm or less, 52 dyn/cm or less, 51 dyn/cm or less, or 50 dyn/cm or less.

In an embodiment, the second side may be a belt side of the film. The belt side refers to a side that comes into contact with a support used in forming a polyamide-imide-based film. Specifically, in the process for preparing the film, the belt side may refer to a side that comes into contact with a belt on which the polyamide-imide-based polymer solution is cast and dried.

According to an embodiment, the polyamide-imide-based film has a modulus of 5.0 GPa or more. Specifically, the modulus may be 5.5 GPa or more, 5.7 GPa or more, or 6 GPa or more.

The polyamide-imide-based film may have a transmittance of 80% or more. For example, the transmittance may be 85% or more, 88% or more, and it may be 100% or less or 99% or less.

The polyamide-imide-based film has a haze of 1% or less. Specifically, the haze may be 0.8% or less, 0.7% or less, 0.6% or less, or 0.5% or less, but it is not limited thereto.

The transmittance and/or haze of the film may be values measured in the visible light wavelength range (400 to 700 nm). Specifically, the transmittance of the film may be the total light transmittance measured in the visible light wavelength range.

The polyamide-imide-based film has a yellow index of 5 or less. For example, the yellow index may be 4.5 or less, 4.0 or less, or 3.5 or less, but it is not limited thereto.

In an embodiment, the polyamide-imide-based film has a thickness deviation of 3 μm or less or 2 μm or less based on a thickness of 50 μm. In addition, the thickness deviation rate may be 5% or less, 4% or less, or 3% or less, but it is not limited thereto.

In an embodiment, the polyamide-imide-based film may have a modulus of 5 GPa or more, a transmittance of 80% or more, a haze of 1% or less, and a yellow index of 5 or less, based on a film thickness of 50 μm, but it is not limited thereto.

The polyamide-imide-based film may have a compressive strength of 0.4 kgf/μm or more. Specifically, the compressive strength may be 0.45 kgf/μm or more, or 0.46 kgf/μm or more, but it is not limited thereto.

When the polyamide-imide-based film is perforated at a speed of 10 mm/minute using a 2.5-mm spherical tip in a UTM compression mode, the maximum diameter (mm) of perforation including a crack is 60 mm or less. Specifically, the maximum diameter of perforation may be 5 to 60 mm, 10 to 60 mm, 15 to 60 mm, 20 to 60 mm, 25 to 60 mm, or 25 to 58 mm, but it is not limited thereto.

The polyamide-imide-based film may have a surface hardness of HB or higher. Specifically, the surface hardness may be H or higher, or 2H or higher, but it is not limited thereto.

The polyamide-imide-based film may have a tensile strength of 15 $kgf/mm^2$ or more. Specifically, the tensile strength may be 18 $kgf/mm^2$ or more, 20 $kgf/mm^2$ or more, 21 $kgf/mm^2$ or more, or 22 $kgf/mm^2$ or more, but it is not limited thereto.

The polyamide-imide-based film may have an elongation of 15% or more. Specifically, the elongation may be 16% or more, 17% or more, or 18% or more, but it is not limited thereto.

When the polyamide-imide-based film based on a thickness of 50 μm is folded to have a radius of curvature of 3 mm, the number of folding before the fracture may be 200,000 or more.

The number of folding counts one when the film is folded to have a radius of curvature of 3 mm and then unfolded.

As the number of folding of the polyamide-imide-based film satisfies the above range, it can be advantageously applied to a foldable display device or a flexible display device.

The polyamide-imide-based film may have a surface roughness of 0.01 μm to 0.07 μm. Specifically, the surface roughness may be 0.01 μm to 0.07 μm or 0.01 μm to 0.06 μm, but it is not limited thereto.

As the surface roughness of the polyamide-imide-based film satisfies the above range, it may be advantageous for achieving luminance conditions or a sense of texture preferable for the application thereof to a display device.

The content of residual solvents in the polyamide-imide-based film may be 1,500 ppm or less. For example, the content of residual solvents may be 1,200 ppm or less, 1,000 ppm or less, 800 ppm or less, 500 ppm or less, or 300 ppm or less, but it is not limited thereto.

The residual solvent refers to a solvent that has not been volatilized during the film production and remains in the film finally produced.

If the content of the residual solvents in the polyamide-imide-based film exceeds the above range, the durability of the film may be deteriorated, and it may have an impact on the quality variation of the film. In particular, since it affects the mechanical strength, it may adversely affect the post-processing of the film. Since the hygroscopicity of the film is accelerated, its optical properties or light resistance and thermal resistance, let alone the mechanical properties, may be deteriorated as well.

The polyamide-imide-based film according to an embodiment comprises a polyamide-imide-based polymer, which is prepared by polymerizing a diamine compound, a dianhydride compound, and a dicarbonyl compound.

The polyamide-imide-based polymer is a polymer that contains an imide repeat unit and an amide repeat unit.

Specifically, the polyamide-imide-based polymer comprises an imide repeat unit derived from the polymerization of the diamine compound and the dianhydride compound and an amide repeat unit derived from the polymerization of the diamine compound and the dicarbonyl compound.

The diamine compound is a compound that forms an imide bond with the dianhydride compound and forms an amide bond with the dicarbonyl compound, to thereby form a copolymer.

The diamine compound is not particularly limited, but it may be, for example, an aromatic diamine compound that contains an aromatic structure. For example, the diamine compound may be a compound represented by the following Formula 1.

[Formula 1] $\mathbf{H_2N\text{-}(E)_e\text{-}NH_2}$

In Formula 1, E may be selected from a substituted or unsubstituted divalent $C_6$-$C_{30}$ aliphatic cyclic group, a substituted or unsubstituted divalent $C_4$-$C_{30}$ heteroaliphatic cyclic group, a substituted or unsubstituted divalent $C_6$-$C_{30}$ aromatic cyclic group, a substituted or unsubstituted divalent $C_4$-$C_{30}$ heteroaromatic cyclic group, a substituted or unsubstituted $C_1$-$C_{30}$ alkylene group, a substituted or unsubstituted $C_2$-$C_{30}$ alkenylene group, a substituted or unsubstituted $C_2$-$C_{30}$ alkynylene group, -O-, -S-, -C(=O)-, - CH(OH)-, -S(=O)$_2$-, -Si($CH_3$)$_2$-, -C($CH_3$)$_2$-, and -C($CF_3$)$_2$-.

e is selected from integers of 1 to 5. When e is 2 or more, the Es may be the same as, or different from, each other.

$(E)_e$ in Formula 1 may be selected from the groups represented by the following Formulae 1-la to 1-14a, but it is not limited thereto.

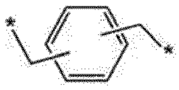
1-1a
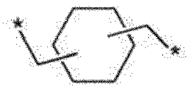
1-2a
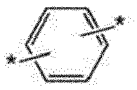
1-3a
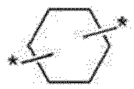
1-4a
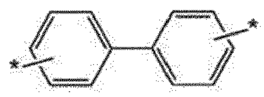
1-5a

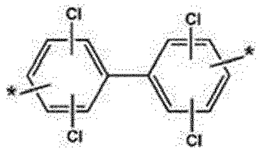
1-6a
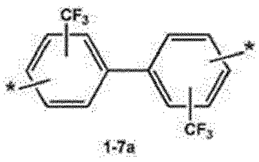
1-7a
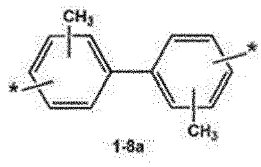
1-8a

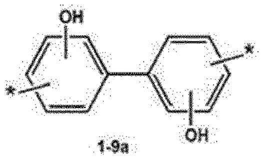
1-9a
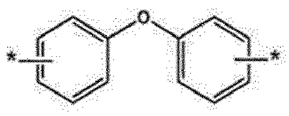
1-10a
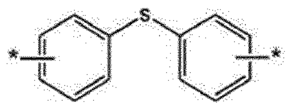
1-11a

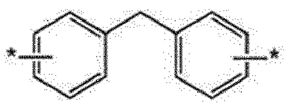
1-12a
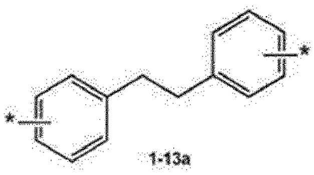
1-13a

$*\text{-}(CH_2)_n\text{-}*$

(n is selected from integers of 1 to 12) 1.14a

Specifically, $(E)_e$ in Formula 1 may be selected from the groups represented by the following Formulae 1-1b to 1-13b, but it is not limited thereto.

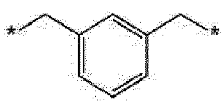
1-1b
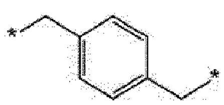
1-2b
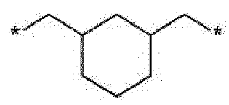
1-3b
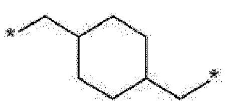
1-4b

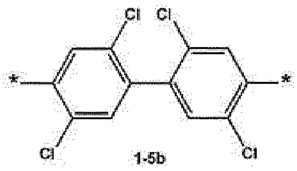
1-5b

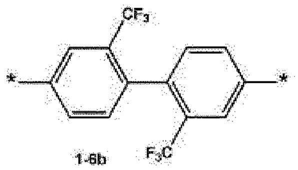
1-6b

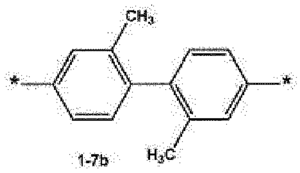
1-7b

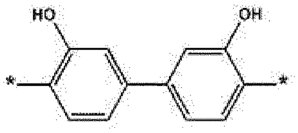
1-8b

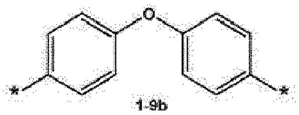
1-9b

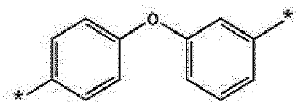
1-10b

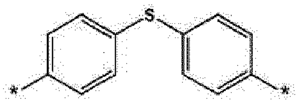
1-11b

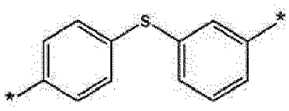
1-12b

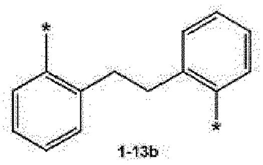
1-13b

More specifically, (E)e in Formula 1 may be the group represented by the above Formula 1-6b or the group represented by the above Formula 1-9b.

In an embodiment, the diamine compound may comprise a compound having a fluorine-containing substituent or a compound having an ether group (-O-).

The diamine compound may be composed of a compound having a fluorine-containing substituent. In such an event, the fluorine-containing substituent may be a fluorinated hydrocarbon group and specifically may be a trifluoromethyl group. But it is not limited thereto.

In some embodiments, the diamine compound may comprise one kind of diamine compound. That is, the diamine compound may be composed of a single component.

For example, the diamine compound may comprise 2,2'-bis(trifluoromethyl)-4,4'-diaminobiphenyl (TFDB) represented by the following formula, but it is not limited thereto.

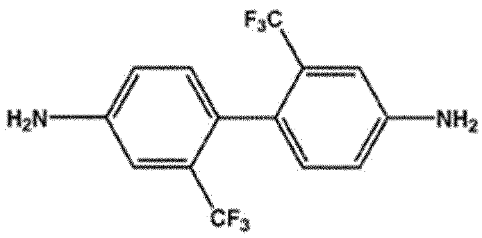

**TFDB**

The dianhydride compound has a low birefringence value, so that it can contribute to enhancements in the optical properties such as the transmittance of a film that comprises the polyamide-imide-based polymer.

The dianhydride compound is not particularly limited, but it may be, for example, an aromatic dianhydride compound that contains an aromatic structure. For example, the aromatic dianhydride compound may be a compound represented by the following Formula 2.

[Formula 2]

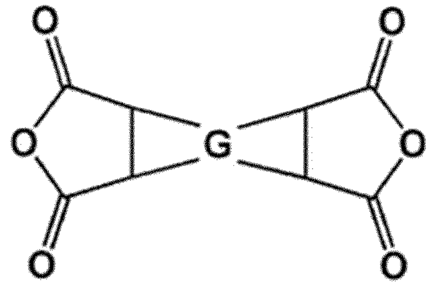

In Formula 2, G may be a group selected from a substituted or unsubstituted tetravalent $C_6$-$C_{30}$ aliphatic cyclic group, a substituted or unsubstituted tetravalent $C_4$-$C_{30}$ heteroaliphatic cyclic group, a substituted or unsubstituted tetravalent $C_6$-$C_{30}$ aromatic cyclic group, or a substituted or unsubstituted tetravalent $C_4$-$C_{30}$ heteroaromatic cyclic group, wherein the aliphatic cyclic group, the heteroaliphatic cyclic group, the aromatic cyclic group, or the heteroaromatic cyclic group may be present alone, may be fused to each other to form a condensed ring, or may be bonded by a bonding group selected from a substituted or unsubstituted $C_1$-$C_{30}$ alkylene group, a substituted or unsubstituted $C_2$-$C_{30}$ alkenylene group, a substituted or unsubstituted $C_2$-$C_{30}$ alkynylene group, -O-, -S-, - C(=O)-, -CH(OH)-, $-S(=O)_2-$, $-Si(CH_3)_2-$, $-C(CH_3)_2-$, and $-C(CF_3)_2-$.

G in the above Formula 2 may be selected from the groups represented by the following Formulae 2-1a to 2-9a, but it is not limited thereto.

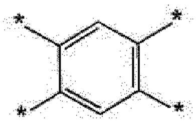

2-1a

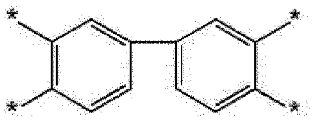

2-2a

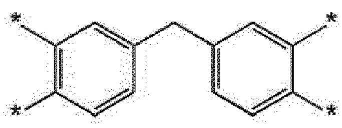

2-3a

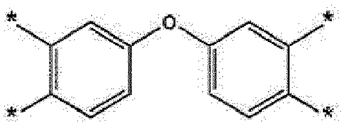

2-4a

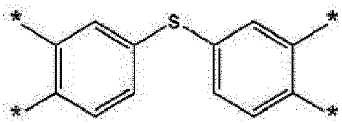

2-5a

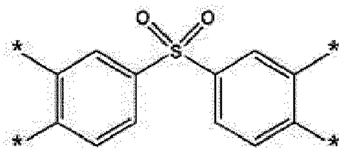

2-6a

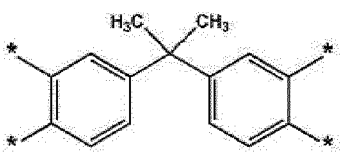

2-7a

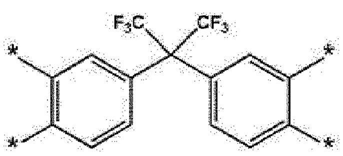

2-8a

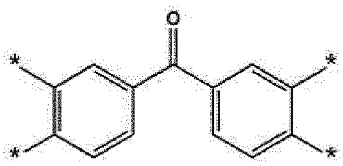

2-9a

For example, G in Formula 2 may be the group represented by the above Formula 2-2a, the group represented by the above Formula 2-8a, or the group represented by the above Formula 2-9a.

In an embodiment, the dianhydride compound may comprise a compound having a fluorine-containing substituent, a compound having a biphenyl group, or a compound having a ketone group.

The fluorine-containing substituent may be a fluorinated hydrocarbon group and specifically may be a trifluoromethyl group. But it is not limited thereto.

In another embodiment, the dianhydride compound may be composed of a single component or a mixture of two components.

For example, the dianhydride compound may comprise at least one selected from the group consisting of 2,2'-bis-(3,4-dicarboxyphenyl)hexafluoropropane dianhydride (6FDA) and 3,3',4,4'-biphenyltetracarboxylic dianhydride (BPDA), which have the following structures, but it is not limited thereto.

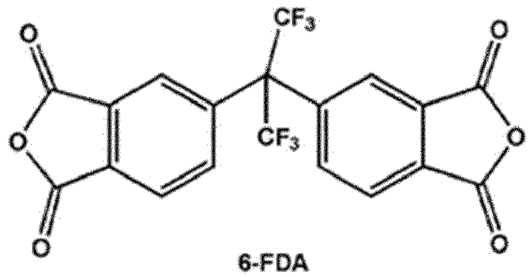

6-FDA

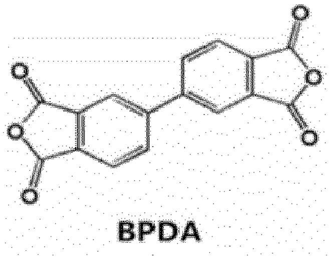

BPDA

The diamine compound and the dianhydride compound may be polymerized to form a polyamic acid.
Subsequently, the polyamic acid may be converted to a polyimide through a dehydration reaction, and the polyimide comprises an imide repeat unit.
The polyimide may form a repeat unit represented by the following Formula A.

[Formula A]

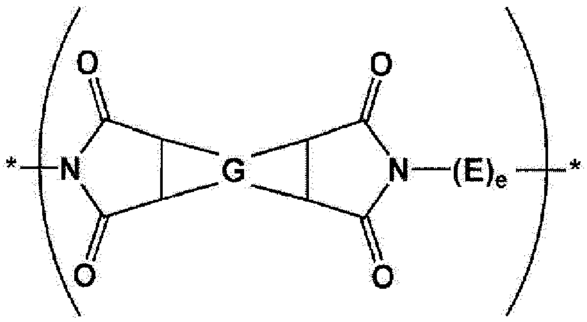

In Formula A, E, G, and e are as described above.
For example, the polyimide may comprise a repeat unit represented by the following Formula A-1, but it is not limited thereto.

[Formula A-1]

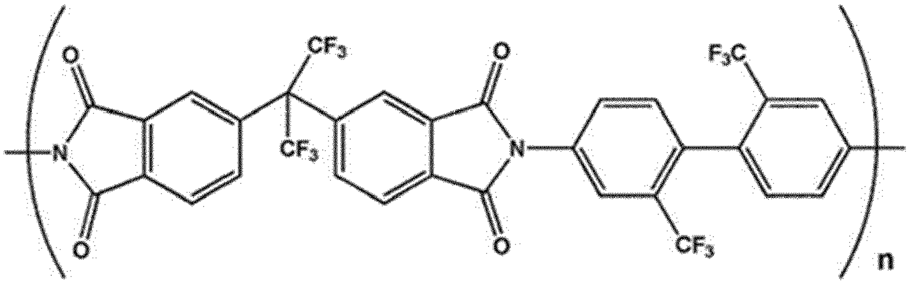

In Formula A-1, n is an integer of 1 to 400.
The dicarbonyl compound is not particularly limited, but it may be, for example, a compound represented by

the following Formula 3.

[Formula 3]

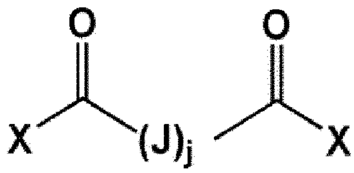

In Formula 3, J may be selected from a substituted or unsubstituted divalent $C_6$-$C_{30}$ aliphatic cyclic group, a substituted or unsubstituted divalent $C_4$-$C_{30}$ heteroaliphatic cyclic group, a substituted or unsubstituted divalent $C_6$-$C_{30}$ aromatic cyclic group, a substituted or unsubstituted divalent $C_4$-$C_{30}$ heteroaromatic cyclic group, a substituted or unsubstituted $C_1$-$C_{30}$ alkylene group, a substituted or unsubstituted $C_2$-$C_{30}$ alkenylene group, a substituted or unsubstituted $C_2$-$C_{30}$ alkynylene group, -O-, -S-, -C(=O)-, - CH(OH)-, -S(=O)$_2$-, -Si(CH$_3$)$_2$-, -C(CH$_3$)$_2$-, and -C(CF$_3$)$_2$-.

j is selected from integers of 1 to 5. When j is 2 or more, the Js may be the same as, or different from, each other.

X is a halogen atom. Specifically, X may be F, Cl, Br, I, or the like. More specifically, X may be Cl, but it is not limited thereto.

$(J)_j$ in the above Formula 3 may be selected from the groups represented by the following Formulae 3-la to 3-14a, but it is not limited thereto.

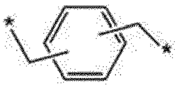
3-1a
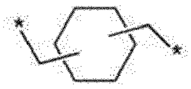
3-2a
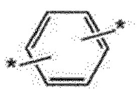
3-3a
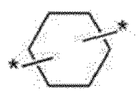
3-4a
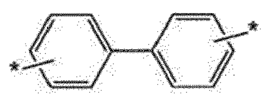
3-5a

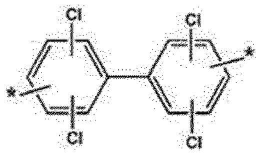
3-6a
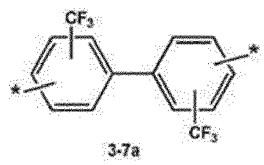
3-7a
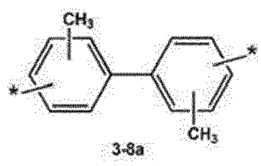
3-8a

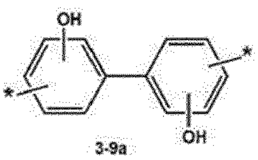
3-9a
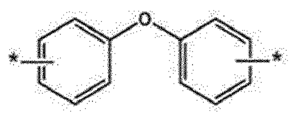
3-10a
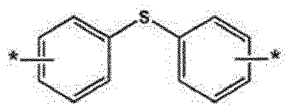
3-11a

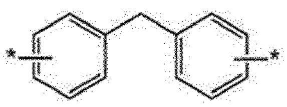
3-12a
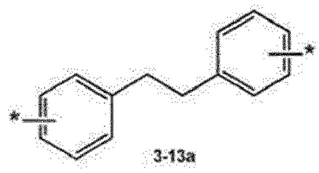
3-13a

$*-(CH_2)_n-*$

(n is selected from integers of 1 to 12) **3-14a**

Specifically, $(J)_j$ in the above Formula 3 may be selected from the groups represented by the following Formulae 3-1b to 3-8b, but it is not limited thereto.

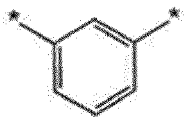

3-1b

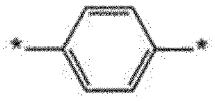

3-2b

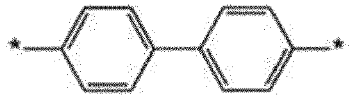

3-3b

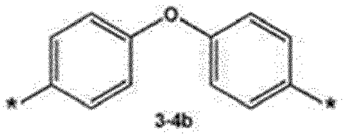

3-4b

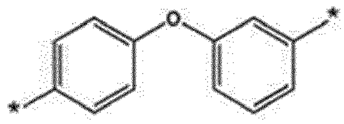

3-5b

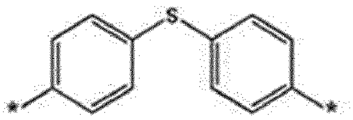

3-6b

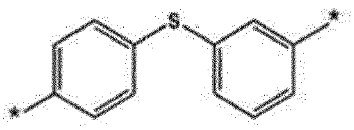

3-7b

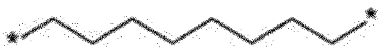

3-8b

More specifically, $(J)_j$ in Formula 3 may be the group represented by the above Formula 3-1b, the group represented by the above Formula 3-2b, the group represented by the above Formula 3-3b, or the group represented by the above Formula 3-8b.

For example, $(J)_j$ in the above Formula 3 may be the group represented by the above Formula 3-lb or the group represented by the above Formula 3-2b.

In an embodiment, one kind of a dicarbonyl compound may be used alone, or a mixture of at least two kinds of dicarbonyl compounds different from each other may be used, as the dicarbonyl compound. If two or more dicarbonyl compounds are used, at least two dicarbonyl compounds in which $(J)_j$ in the above Formula 3 is selected from the groups represented by the above Formulae 3-1b to 3-8b may be used as the dicarbonyl compound.

In another embodiment, the dicarbonyl compound may be an aromatic dicarbonyl compound that contains an aromatic structure.

The dicarbonyl compound may comprise terephthaloyl chloride (TPC), 1,1'-biphenyl-4,4'-dicarbonyl dichloride (BPDC), isophthaloyl chloride (IPC), as represented by the following formulae, or a combination thereof. But it is not limited thereto.

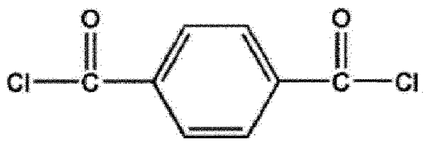

TPC

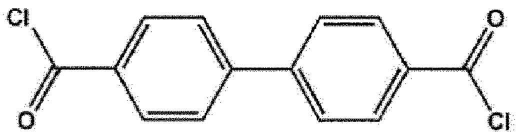

BPDC

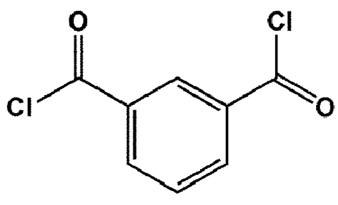

IPC

The diamine compound and the dicarbonyl compound may be polymerized to form a repeat unit represented by the following Formula B.

[Formula B]

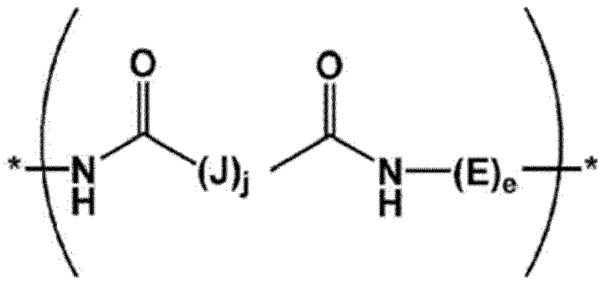

In Formula B, E, J, e, and j are as described above.

For example, the diamine compound and the dicarbonyl compound may be polymerized to form amide repeat units represented by the following Formulae B-1 and B-2.

Alternatively, the diamine compound and the dicarbonyl compound may be polymerized to form amide repeat units represented by the following Formulae B-2 and B-3.

[Formula B-1]

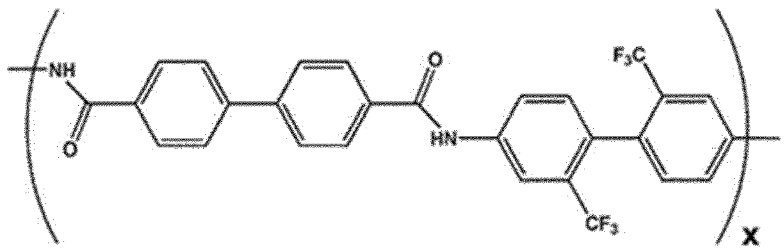

In Formula B-1, x is an integer of 1 to 400.

[Formula B-2]

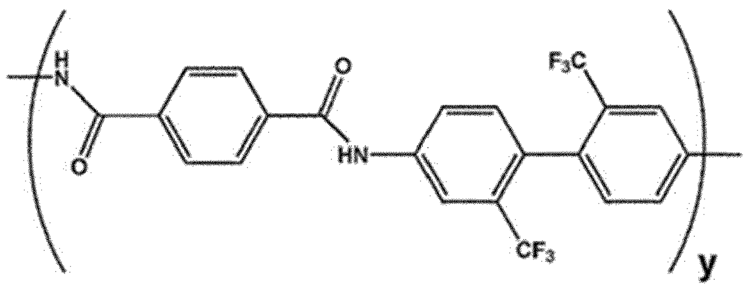

In Formula B-2, y is an integer of 1 to 400.

[Formula B-3]

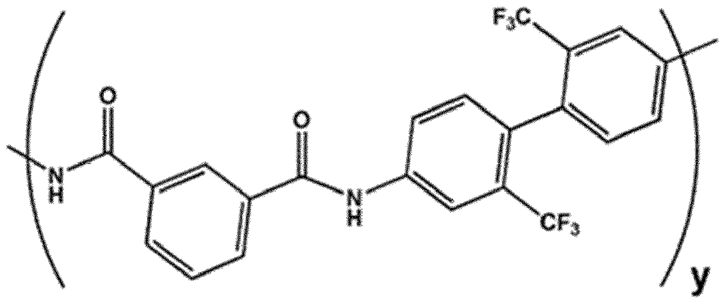

In Formula B-3, y is an integer of 1 to 400.

According to an embodiment, the polyamide-imide-based polymer may comprise a repeat unit represented by the following Formula A and a repeat unit represented by the following Formula B:

[Formula A]

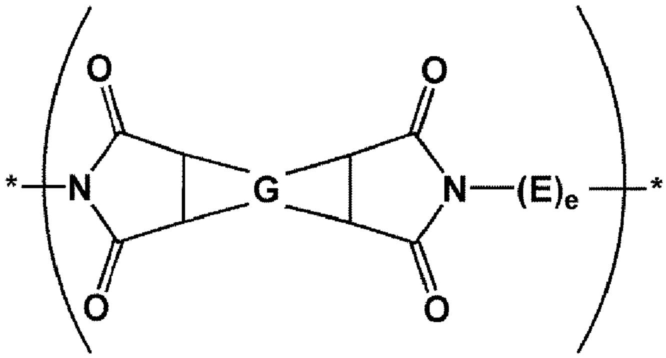

[Formula B]

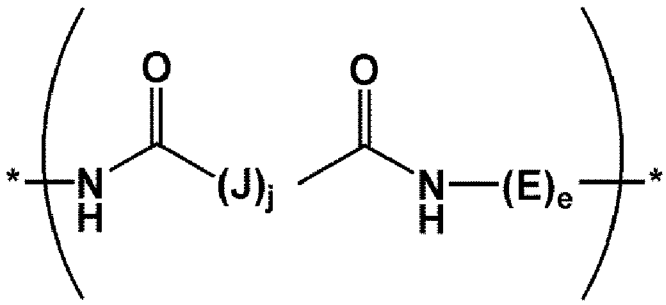

In Formulae A and B, E and J are each independently selected from a substituted or unsubstituted divalent $C_6$-$C_{30}$ aliphatic cyclic group, a substituted or unsubstituted divalent $C_4$-$C_{30}$ heteroaliphatic cyclic group, a substituted or unsubstituted divalent $C_6$-$C_{30}$ aromatic cyclic group, a substituted or unsubstituted divalent $C_4$-$C_{30}$ heteroaromatic cyclic group, a substituted or unsubstituted $C_1$-$C_{30}$ alkylene group, a substituted or unsubstituted $C_2$-$C_{30}$ alkenylene group, a substituted or unsubstituted $C_2$-$C_{30}$ alkynylene group, -O-, -S-, -C(=O)-, -CH(OH)-, $-S(=O)_2-$, $-Si(CH_3)_2-$, $-C(CH_3)_2-$, and $-C(CF_3)_2-$,

e and j are each independently selected from integers of 1 to 5,
when e is 2 or more, then the two or more Es are the same as, or different from, each other,
when j is 2 or more, then the two or more Js are the same as, or different from, each other,
G is a substituted or unsubstituted tetravalent $C_6$-$C_{30}$ aliphatic cyclic group, a substituted or unsubstituted tetravalent $C_4$-$C_{30}$ heteroaliphatic cyclic group, a substituted or unsubstituted tetravalent $C_6$-$C_{30}$ aromatic cyclic group, or a substituted or unsubstituted tetravalent $C_4$-$C_{30}$ heteroaromatic cyclic group, wherein the aliphatic cyclic group, the

heteroaliphatic cyclic group, the aromatic cyclic group, or the heteroaromatic cyclic group is present alone, fused to each other to form a condensed ring, or bonded by a bonding group selected from a substituted or unsubstituted $C_1$-$C_{30}$ alkylene group, a substituted or unsubstituted $C_2$-$C_{30}$ alkenylene group, a substituted or unsubstituted $C_2$-$C_{30}$ alkynylene group, -O-, -S-, -C(=O)-, -CH(OH)-, $-S(=O)_2-$, $-Si(CH_3)_2-$, $-C(CH_3)_2-$, and $-C(CF_3)_2-$.

The polyamide-imide-based polymer may comprise an imide-based repeat unit and an amide-based repeat unit at a molar ratio of 2:98 to 70:30. Specifically, the molar ratio of the imide repeat unit to the amide repeat unit may be 2:98 to 60:40, 2:98 to 55:45, 2:98 to 50:50, 5:95 to 70:30, 5:95 to 60:40, 5:95 to 55:45, 5:95 to 50:50, or 10:90 to 40:60, but it is not limited thereto.

If the molar ratio of the imide repeat unit to the amide repeat unit is within the above range, it is possible to effectively control the TGA characteristics such as the TGA weight loss area value (TDA) of the polyamide-imide-based film and to enhance the quality reliability of the film in combination with the characteristic processing method.

In the polyamide-imide-based polymer, the molar ratio of the repeat unit represented by the above Formula A to the repeat unit represented by the above Formula B may be 2:98 to 70:30. Specifically, the molar ratio of the repeat unit represented by Formula A to the repeat unit represented by Formula B may be 2:98 to 60:40, 2:98 to 55:45, 2:98 to 50:50, 5:95 to 70:30, 5:95 to 60:40, 5:95 to 55:45, 5:95 to 50:50, or 10:90 to 40:60, but it is not limited thereto.

The polyamide-imide-based film according to an embodiment may further comprise at least one selected from the group consisting of a filler, a blue pigment, and a UVA absorber in addition to the polyamide-imide-base polymer.

The filler may comprise, for example, an oxide, a carbonate, or a sulfate of metal or metalloid. For example, the filler may comprise silica, calcium carbonate, barium sulfate, or the like, but it is not limited thereto.

The filler may be employed in the form of particles. In addition, the surface of the filler is not subjected to special coating treatment, and it may be uniformly dispersed in the entire film.

As the polyamide-imide-based film comprises the filler, it is possible to secure a wide angle of view without a deterioration in the optical properties of the film and to enhance not only the roughness and winderability but also the effect of improving --the scratches caused by sliding-- in the preparation of the film.

The filler may have a refractive index of 1.55 to 1.75. Specifically, the refractive index of the filler may be 1.60 to 1.75, 1.60 to 1.70, 1.60 to 1.68, or 1.62 to 1.65, but it is not limited thereto.

If the refractive index of the filler satisfies the above range, the birefringence values related to the x-direction refractive index (nx), y-direction refractive index (ny), and z-direction refractive index (nz) can be appropriately adjusted, and the luminance of the film at various angles can be improved.

On the other hand, if the refractive index of the filler is outside the above range, there may arise a problem in that the filler is visually noticeable on the film or that the haze is increased due to the filler.

The content of the filler may be 100 ppm to 15,000 ppm based on the total weight of the solids content of the polyamide-imide-based polymer. Specifically, the content of the filler may be 100 ppm to 14,500 ppm, 100 ppm to 14,200 ppm, 200 ppm to 14,500 ppm, 200 ppm to 14,200 ppm, 250 ppm to 14,100 ppm, or 300 ppm to 14,000 ppm, based on the total weight of the solids content of the polyamide-imide-based polymer, but it is not limited thereto.

If the content of the filler is outside the above range, the haze of the film is steeply increased, and the filler may aggregate with each other on the surface of the film, so that a feeling of foreign matter may be visually observed, or it may cause a trouble in the sliding performance or deteriorate the windability in the preparation process.

In some embodiments, the blue pigment may be employed in an amount of 50 to 5,000 ppm based on the total weight of the polyamide-imide-based polymer. Preferably, the blue pigment may be employed in an amount of 100 to 5,000 ppm, 200 to 5,000 ppm, 300 to 5,000 ppm, 400 to 5,000 ppm, 50 to 3,000 ppm, 100 to 3,000 ppm, 200 to 3,000 ppm, 300 to 3,000 ppm, 400 to 3,000 ppm, 50 to 2,000 ppm, 100 to 2,000 ppm, 200 to 2,000 ppm, 300 to 2,000 ppm, 400 to 2,000 ppm, 50 to 1,000 ppm, 100 to 1,000 ppm, 200 to 1,000 ppm, 300 to 1,000 ppm, or 400 to 1,000 ppm, based on the total weight of the polyamide-imide-based polymer, but it is not limited thereto.

The UVA absorber may comprise an absorber that absorbs electromagnetic waves of a wavelength of 10 to 400 nm used in the art. For example, the UVA absorber may comprise a benzotriazole-based compound. The benzotriazole-based compound may comprise an N-phenolic benzotriazole-based compound. In some embodiments, the N-phenolic benzotriazole-based compound may comprise N-phenolic benzotriazole in which the phenol group is substituted with an alkyl group having 1 to 10 carbon atoms. It may be substituted with two or more of the alkyl group, which may be linear, branched, or cyclic.

In some embodiments, the UVA absorber may be employed in an amount of 0.1 to 10% by weight based on the total weight of the polyamide-imide-based polymer. Preferably, the UVA absorber may be employed in an amount of 0.1 to 5% by weight, 0.1 to 3% by weight, 0.1 to 2% by weight, 0.5 to 10% by weight, 0.5 to 5% by weight, 0.5 to 3% by weight, 0.5 to 2% by weight, 1 to 10% by weight, 1 to 5% by weight, 1 to 3% by weight, or 1 to 2% by weight, relative to the total weight of the polyamide-imide-based polymer, but it is not limited thereto.

The physical properties of the polyamide-imide-based film as described above are based on a thickness of 40 $\mu$m to 80 $\mu$m. For example, the physical properties of the polyamide-imide-based film are based on a thickness of 50 $\mu$m.

The features on the components and properties of the polyamide-imide-based film as described above may be combined with each other.

In addition, the TGA weight loss area value (TDA), first weight loss temperature (Tw), 1% weight loss temperature (Td1), and/or 5% weight loss temperature (Td5) of the polyamide-imide-based film in a TGA analysis as described above may be adjusted by combinations of the chemical and physical properties of the components, which constitute the polyamide-imide-based film, along with the specific conditions in each step of the process for preparing the polyamide-imide-based film as described below.

For example, the compositions and contents of the components that constitute the polyamide-imide-based film, the residual content of solvents, the polymerization conditions and thermal treatment conditions in the thermal treatment and cooling steps in the film preparation process, and the like are all combined to achieve the physical properties such as the TGA weight loss area value (TDA), first weight loss temperature (Tw), and the like in the desired ranges.

## Cover window for a display device

The cover window for a display device according to an embodiment comprises a polyamide-imide-based film and a functional layer.

The polyamide-imide-based film has a TGA weight loss area value (TDA) of 0.01%·min/°C or less.

Details on the polyamide-imide-based film are as described above.

The cover window for a display device can be advantageously applied to a display device.

## Display device

The display device according to an embodiment comprises a display unit; and a cover window disposed on the display unit, wherein the cover window comprises a polyamide-imide-based film and a functional layer.

The polyamide-imide-based film has a TGA weight loss area value (TDA) of 0.01%·min/°C or less.

Details on the polyamide-imide-based film and the cover window are as described above.

Fig. 1 is a schematic exploded view of a display device according to an embodiment. Fig. 2 is a schematic perspective view of a display device according to an embodiment. Fig. 3 is a schematic cross-sectional view of a display device according to an embodiment.

Specifically, Figs. 1 to 3 each illustrate a display device, which comprises a display unit (400) and a cover window (300) disposed on the display unit (400), wherein the cover window comprises a polyamide-imide-based film (100) having a first side (101) and a second side (102) and a functional layer (200), and an adhesive layer (500) is interposed between the display unit (400) and the cover window (300).

The display unit (400) is for displaying an image, and it may have flexible characteristics.

The display unit (400) may be a display panel for displaying an image. For example, it may be a liquid crystal display panel or an organic electroluminescent display panel. The organic electroluminescent display panel may comprise a front polarizing plate and an organic EL panel.

The front polarizing plate may be disposed on the front side of the organic EL panel. Specifically, the front polarizing plate may be attached to the side on which an image is displayed in the organic EL panel.

The organic EL panel may display an image by self-emission of a pixel unit. The organic EL panel may comprise an organic EL substrate and a driving substrate. The organic EL substrate may comprise a plurality of organic electroluminescent units, each of which corresponds to a pixel. Specifically, it may comprise a cathode, an electron transport layer, a light-emitting layer, a hole transport layer, and an anode. The driving substrate is operatively coupled to the organic EL substrate. That is, the driving substrate may be coupled to the organic EL substrate so as to apply a driving signal such as a driving current, so that the driving substrate can drive the organic EL substrate by applying a current to the respective organic electroluminescent units.

In addition, an adhesive layer (500) may be interposed between the display unit (400) and the cover window (300). The adhesive layer may be an optically transparent adhesive layer, but it is not particularly limited.

The cover window (300) may be disposed on the display unit (400). The cover window is located at the outer position of the display device to thereby protect the display unit.

The cover window (300) may comprise a polyamide-imide-based film and a functional layer. The functional layer may be at least one selected from the group consisting of a hard coating layer, a reflectance reducing layer, an antifouling layer, and an antiglare layer. The functional layer may be coated on at least one side of the polyamide-imide-based film.

The details on the functional layer and the hard coating layer are as described above.

The polyamide-imide-based film according to an embodiment can be applied in the form of a film to the outside of a display device without changing the display driving method, the color filter inside the panel, or the laminated structure, thereby providing a display device having a uniform thickness, low haze, high transmittance, and high transparency.

Since neither significant process changes nor cost increases are needed, it is advantageous in that the production costs can be reduced.

The polyamide-imide-based film according to an embodiment may be excellent in optical properties in terms of high transmittance, low haze, and low yellow index, as well as may have excellent mechanical properties such as modulus and flexibility, and the change (deterioration) of its optical and mechanical properties can be suppressed when it is exposed to UV rays.

Specifically, a polyamide-imide-based film with a TGA weight loss area value (TDA) satisfying the above range or less is excellent in not only optical properties and mechanical properties but also in the suitability for post-processing such as adhesion to a functional layer and solvent resistance. As a result, there is no deterioration in the quality or physical properties of the film even after going through post-processing. When the polyamide-imide-based film is applied to a cover window for a display device or to a display device, the quality reliability and product yield of a final product can be enhanced.

## Process for preparing a polyamide-imide-based film

An embodiment provides a process for preparing a polyamide-imide-based film.

The process for preparing a polyamide-imide-based film according to an embodiment comprises polymerizing a diamine compound, a dianhydride compound, and a dicarbonyl compound in an organic solvent to prepare a polyamide-imide-based polymer solution (S100); casting the solution to prepare a gel sheet (S200); and thermally treating the gel sheet (S300) (see Fig. 4).

The process for preparing a polyamide-imide-based film according to some embodiments may further comprise adjusting the viscosity of the polyamide-imide-based polymer solution (S 110), aging the polyamide-imide-based polymer solution (S 120), and/or degassing the polyamide-imide-based polymer solution (S130).

The polyamide-imide-based film is a film in which a polyamide-imide-based polymer is a main component. The polyamide-imide-based polymer is a resin that comprises an imide repeat unit and an amide repeat unit at a predetermined molar ratio as a structural unit.

In the process for preparing a polyamide-imide-based film, a polymer solution for preparing the polyamide-imide-based polymer may be prepared by simultaneously or sequentially mixing a diamine compound, a dianhydride compound, and a dicarbonyl compound in an organic solvent in a reactor, and reacting the mixture (S 100).

In an embodiment, the polymer solution may be prepared by simultaneously mixing and reacting a diamine compound, a dianhydride compound, and a dicarbonyl compound in an organic solvent.

In another embodiment, the step of preparing the polymer solution may comprise first mixing and reacting the diamine compound and the dianhydride compound in a solvent to produce a polyamic acid (PAA) solution; and second mixing and reacting the polyamic acid (PAA) solution and the dicarbonyl compound to form an amide bond and an imide bond. The polyamic acid solution is a solution that comprises a polymer containing an amic acid repeat unit.

Alternatively, the step of preparing the polymer solution may comprise first mixing and reacting the diamine compound and the dianhydride compound in a solvent to produce a polyamic acid solution; subjecting the polyamic acid solution to dehydration to produce a polyimide (PI) solution; and second mixing and reacting the polyimide (PI) solution and the dicarbonyl compound to further form an amide bond. The polyimide solution is a solution that comprises a polymer having an imide repeat unit.

In still another embodiment, the step of preparing the polymer solution may comprise first mixing and reacting the diamine compound and the dicarbonyl compound in a solvent to produce a polyamide (PA) solution; and second mixing and reacting the polyamide (PA) solution and the dianhydride compound to further form an imide bond. The polyamide solution is a solution that comprises a polymer having an amide repeat unit.

The polymer solution thus prepared may be a solution that comprises a polymer containing at least one selected from the group consisting of a polyamic acid (PAA) repeat unit, a polyamide (PA) repeat unit, and a polyimide (PI) repeat unit.

Alternatively, the polymer contained in the polymer solution comprises an imide repeat unit derived from the polymerization of the diamine compound and the dianhydride compound and an amide repeat unit derived from the polymerization of the diamine compound and the dicarbonyl compound.

Details on the diamine compound, the dianhydride compound, and the dicarbonyl compound are as described above.

The content of solids contained in the polymer solution may be 10% by weight to 30% by weight. Alternatively, the content of solids contained in the polymer solution may be 15% by weight to 25% by weight, but it is not limited thereto.

If the content of solids contained in the polymer solution is within the above range, a polyamide-imide-based film can be effectively produced in the extrusion and casting steps. In addition, the polyamide-imide-based film thus prepared exhibits similar thermal properties in the directions of the film, whereby its quality is uniform, and it can have excellent mechanical properties, optical properties, and thermal resistance.

In another embodiment, the step of preparing the polymer solution may further comprise introducing a catalyst.
Here, the catalyst may comprise at least one selected from the group consisting of beta picoline, acetic anhydride, isoquinoline (IQ), and pyridine-based compounds, but it is not limited thereto.
The catalyst may be added in an amount of 0.01 to 0.5 molar equivalent, 0.01 to 0.4 molar equivalent, or 0.01 to 0.3 molar equivalent, based on 1 mole of the polyamic acid, but it is not limited thereto.
The further addition of the catalyst may expedite the reaction rate and enhance the chemical bonding force between the repeat unit structures or that within the repeat unit structures.
In an embodiment, the step of preparing the polymer solution may further comprise adjusting the viscosity of the polymer solution (S 110). The viscosity of the polymer solution may be 80,000 cps to 500,000 cps, 100,000 cps to 500,000 cps, 150,000 cps to 500,000 cps, 150,000 cps to 450,000 cps, 200,000 cps to 450,000 cps, 200,000 cps to 400,000 cps, 200,000 cps to 350,000 cps, or 250,000 cps to 350,000 cps at room temperature. In such an event, the film-forming capability of a polyamide-imide-based film can be enhanced, thereby enhancing the thickness uniformity.
Specifically, the step of preparing the polymer solution may comprise simultaneously or sequentially mixing and reacting a diamine compound, a dianhydride compound, and a dicarbonyl compound in an organic solvent to prepare a first polymer solution; and further adding the dicarbonyl compound to prepare a second polymer solution having the target viscosity.
In the steps of preparing the first polymer solution and the second polymer solution, the polymer solutions have viscosities different from each other. For example, the second polymer solution has a viscosity higher than that of the first polymer solution.
In the steps of preparing the first polymer solution and the second polymer solution, the stirring speeds may be different from each other. For example, the stirring speed when the first polymer solution is prepared may be faster than the stirring speed when the second polymer solution is prepared.
In still another embodiment, the step of preparing the polymer solution may further comprise adjusting the pH of the polymer solution. In this step, the pH of the polymer solution may be adjusted to 4 to 7, for example, 4.5 to 7.
The pH of the polymer solution may be adjusted by adding a pH adjusting agent. The pH adjusting agent is not particularly limited and may include, for example, amine-based compounds such as alkoxyamine, alkylamine, and alkanolamine.
As the pH of the polymer solution is adjusted to the above range, it is possible to prevent the occurrence of defects in a film produced from the polymer solution and to achieve the desired optical properties and mechanical properties in terms of yellow index and modulus.
The pH adjusting agent may be employed in an amount of 0.1% by mole to 10% by mole based on the total number of moles of monomers in the polymer solution.
In an embodiment, the organic solvent may be at least one selected from the group consisting of dimethylformamide (DMF), dimethylacetamide (DMAc), N-methyl-2-pyrrolidone (NMP), m-cresol, tetrahydrofuran (THF), and chloroform. The organic solvent employed in the polymer solution may be dimethylacetamide (DMAc), but it is not limited thereto.
In another embodiment, at least one selected from the group consisting of a filler, a blue pigment, and a UVA absorber may be added to the polymer solution.
Details on the types and contents of the filler, blue pigment, and UVA absorber are as described above. The filler, blue pigment, and UVA absorber may be mixed with the polyamide-imide-based polymer in the polymer solution.
The polymer solution may be stored at -20°C to 20°C, -20°C to 10°C, -20°C to 5°C, -20°C to 0°C, or 0°C to 10°C.
If it is stored at the above temperature, it is possible to prevent degradation of the polymer solution and to lower the moisture content to thereby prevent defects of a film produced therefrom.
In some embodiments, the polymer solution or the polymer solution whose viscosity has been adjusted may be aged (S 120).
The aging may be carried out by leaving the polymer solution at a temperature of -10 to 10°C for 24 hours or longer. In such an event, the polyamide-imide-based polymer or unreacted materials contained in the polymer solution, for example, may complete the reaction or achieve chemical equilibrium, whereby the polymer solution may be homogenized. The mechanical properties and optical properties of a polyamide-imide-based film formed therefrom may be substantially uniform over the entire area of the film. Preferably, the aging may be carried out at a temperature of -5 to 10°C, -5 to 5°C, or -3 to 5°C, but it is not limited thereto.
In an embodiment, the process may further comprise degassing the polyamide-imide-based polymer solution (S130). The step of degassing may remove moisture in the polymer solution and reduce impurities, thereby increasing the reaction yield and imparting excellent surface appearance and mechanical properties to the film finally produced.
The degassing may comprise vacuum degassing or purging with an inert gas.
The vacuum degassing may be carried out for 30 minutes to 3 hours after depressurizing the internal pressure of the tank in which the polymer solution is contained to 0.1 bar to 0.7 bar. The vacuum degassing under these conditions may reduce bubbles in the polymer solution. As a result, it is possible to prevent surface defects of a film produced

therefrom and to achieve excellent optical properties such as haze.

In addition, the purging may be carried out by purging the tank with an inert gas at an internal pressure of 1 atm to 2 atm. The purging under these conditions may remove moisture in the polymer solution, reduce impurities to thereby increase the reaction yield, and achieve excellent optical properties such as haze and mechanical properties.

The inert gas may be at least one selected from the group consisting of nitrogen, helium (He), neon (Ne), argon (Ar), krypton (Kr), xenon (Xe), and radon (Rn), but it is not limited thereto. Specifically, the inert gas may be nitrogen.

The vacuum degassing and the purging with an inert gas may be carried out in separate steps.

For example, the step of vacuum degassing may be carried out, followed by the step of purging with an inert gas, but it is not limited thereto.

The vacuum degassing and/or the purging with an inert gas may improve the physical properties of the surface of a polyamide-imide-based film thus produced.

The polymer solution may be cast to prepare a gel sheet (S200).

For example, the polymer solution may be extruded and coated onto a support to form a gel sheet.

In addition, the casting thickness of the polymer solution may be 200 μm to 700 μm. As the polymer solution is cast to a thickness within the above range, the final film produced after the thermal treatment may have an appropriate and uniform thickness.

The polymer solution may have a viscosity of 150,000 cps to 500,000 cps at room temperature as described above. As the viscosity satisfies the above range, the polymer solution can be cast to a uniform thickness without defects, and a polyamide-imide-based film having a substantially uniform thickness can be formed without local/partial thickness variations during the subsequent thermal treatment.

The gel sheet may be thermally treated to form a polyamide-imide-based film (S300).

The thermal treatment of the gel sheet may be carried out, for example, through a thermosetting device.

The step of thermally treating the gel sheet may comprise two or more thermal treatment steps and two or more cooling steps. For example, the step of thermally treating the gel sheet may comprise three or more thermal treatment steps and three or more cooling steps.

In an embodiment, the step of thermally treating the gel sheet may comprise a first thermal treatment step, a second thermal treatment step, and a third thermal treatment step. Specifically, the step of thermally treating the gel sheet may comprise a first thermal treatment step, a second thermal treatment step, a third thermal treatment step, a first cooling step, a second cooling step, and a third cooling step. More specifically, the step of thermally treating the gel sheet may comprise a first thermal treatment step (S310), a first cooling step (S320), a second thermal treatment step (S330), a third thermal treatment step (S340), a second cooling step (S350), and a third cooling step (S360), which are sequentially carried out (see Fig. 5).

In the first thermal treatment step, the gel sheet cast from the polymer solution is thermally treated at a temperature of 60°C to 150°C, 70°C to 150°C, 80°C to 150°C, or 90°C to 150°C, for 5 minutes to 60 minutes. Specifically, the gel sheet is thermally treated at a temperature of 90°C to 140°C for 10 minutes to 30 minutes.

The solvent of the gel sheet may be partially or totally volatilized during the first thermal treatment step to dry the gel sheet.

In some embodiments, the first thermal treatment step may be carried out while it is transferred on a belt, but it is not limited to this.

The first cooling step may be carried out after the first thermal treatment step.

Specifically, in the first cooling step, the gel sheet may be cooled at a temperature of 10°C to 70°C, 15°C to 60°C, 15°C to 50°C, or 15°C to 40°C, for 5 minutes to 60 minutes. Specifically, the gel sheet is cooled at a temperature of 15°C to 35°C for 5 minutes to 30 minutes.

The second thermal treatment step may be carried out after the first cooling step.

Specifically, the second thermal treatment step may be carried out by hot air treatment.

In an embodiment, if the thermal treatment with hot air is carried out, heat may be uniformly supplied. If heat is not uniformly supplied, a satisfactory surface roughness cannot be achieved, or the surface quality may not be uniform, and the surface energy may be raised or lowered too much.

The thermal treatment with hot air may be carried out in a temperature range of 60°C to 500°C for 5 minutes to 200 minutes. Specifically, the thermal treatment of the gel sheet may be carried out in a temperature range of 80°C to 350°C at a temperature elevation rate of 1.5°C/minute to 20°C/minute for 5 minutes to 100 minutes. More specifically, the thermal treatment of the gel sheet may be carried out in a temperature range of 140°C to 300°C.

In such an event, the initial temperature of the thermal treatment of the gel sheet by hot air may be 60°C or higher. Specifically, the initial temperature of the thermal treatment of the gel sheet may be 80°C to 180°C. In addition, the maximum temperature in the thermal treatment may be 200°C to 500°C.

In addition, the thermal treatment of the gel sheet may be carried out in two or more stages. Specifically, the thermal treatment of the gel sheet with hot air may be carried out sequentially in a first hot air treatment stage and a second hot air treatment stage. The temperature in the second hot air treatment stage may be higher than the temperature

in the first hot air treatment stage.

In an embodiment, the step of thermally treating the gel sheet may comprise a third thermal treatment step through at least one heater, specifically, thermal treatment through a plurality of heaters after the second thermal treatment step.

The plurality of heaters may comprise a plurality of heaters spaced apart from each other in the transverse direction (TD direction) of the gel sheet. The plurality of heaters may be mounted on a heater mounting part, and two or more heater mounting parts may be disposed along the moving direction (MD direction) of the gel sheet.

The at least one heater may comprise an IR heater. However, the type of the at least one heater is not limited to the above example and may be variously changed. Specifically, the plurality of heaters may each comprise an IR heater.

The thermal treatment by the at least one heater may be carried out in a temperature range of 250°C or higher. Specifically, the thermal treatment by the at least one heater may be carried out for 1 minute to 30 minutes or 1 minute to 20 minutes in a temperature range of 250°C to 400°C.

In the thermal treatment with a heater, the temperature stated above is the temperature in the thermal treatment device in which the gel sheet is present. It corresponds to a temperature measured by a temperature sensor located in the third thermal treatment section of the thermal treatment device.

The second cooling step may be carried out after the third thermal treatment step.

Specifically, in the second cooling step, the gel sheet may be cooled at a temperature of 30°C to 150°C, 30°C to 120°C, 50°C to 120°C, or 70°C to 120°C, for 1 minute to 60 minutes. Specifically, the gel sheet is cooled at a temperature of 70°C to 100°C for 2 minutes to 30 minutes.

In an embodiment, the second cooling step may further comprise a first temperature lowering step of lowering the temperature at a rate of 100°C/minute to 1,000°C/minute.

The third cooling step may be carried out after the second cooling step.

In the third cooling step, the gel sheet may be cooled at a temperature of 10°C to 70°C, 15°C to 60°C, 15°C to 50°C, or 15°C to 40°C, for 1 minute to 60 minutes. Specifically, the gel sheet is cooled at a temperature of 15°C to 35°C for 2 minutes to 30 minutes.

In an embodiment, the third cooling step may further comprise a second temperature lowering step of lowering the temperature at a rate of 40°C/minute to 400°C/minute.

In such an event, specifically, the second temperature lowering step is performed after the first temperature lowering step. The temperature lowering rate of the first temperature lowering step may be faster than the temperature lowering rate of the second temperature lowering step.

For example, the maximum rate of the first temperature lowering step is faster than the maximum rate of the second temperature lowering step. Alternatively, the minimum rate of the first temperature lowering step is faster than the minimum rate of the second temperature lowering step.

If the step of cooling the cured film is carried out in such a multistage manner, it is possible to have the physical properties of the cured film further stabilized and to maintain the optical properties and mechanical properties of the film achieved during the curing step more stably for a long period of time.

As the thermal treatment of the gel sheet is carried out by satisfying the temperature, time, and process sequence of the thermal treatment step and the cooling step, efficient drying and curing are achieved such that residual solvent in the film is minimized, and it is possible to adjust physical properties such as the TGA weight loss area value (TDA), first weight loss temperature (Tw), and 1% weight loss temperature (Tdl) in the desired ranges. In addition, a film prepared by the above preparation process is excellent in optical properties and mechanical properties, as well as the suitability for post-processing such as adhesion to a functional layer and solvent resistance.

The temperature of the second cooling step and the temperature of the third cooling step may be different from each other. The temperature of the second cooling step may be higher than the temperature of the third cooling step, but they are not limited thereto.

In an embodiment, the temperature of the second cooling step may be higher than the temperature of the third cooling step by 20°C to 100°C, 40°C to 80°C, or 50°C to 80°C.

In addition, a step of winding the cooled cured film using a winder may be carried out.

In such an event, the ratio of the moving speed of the gel sheet on the belt at the time of drying to the moving speed of the cured film at the time of winding is 1:0.95 to 1:1.40. Specifically, the ratio of the moving speeds may be 1:0.99 to 1:1.20, 1:0.99 to 1:1.10, or 1: 1.0 to 1:1.05, but it is not limited thereto.

If the ratio of the moving speeds is outside the above range, the mechanical properties of the cured film may be impaired, and the flexibility and elastic properties may be deteriorated.

In the process for preparing a polyamide-imide-based film, the thickness deviation (%) according to the following Equation 1 may be 3% to 30%. Specifically, the thickness deviation (%) may be 5% to 20%, but it is not limited thereto.

$$\text{[Equation 1] Thickness variation (\%)} = (M1 - M2)/M2 \times 100$$

In Equation 1, M1 is the thickness (μm) of the gel sheet, and M2 is the thickness (μm) of the cooled cured film at the time of winding.

The polyamide-imide-based film is prepared by the preparation process as described above such that it is excellent in optical and mechanical properties, as well as can have excellent suitability for post-processing such as adhesion to a functional layer and solvent resistance. The polyamide-imide-based film may be applicable to various uses that require transparency. For example, the polyamide-imide-based film may be applied to not only display devices but also solar cells, semiconductor devices, sensors, and the like.

Details on the polyamide-imide-based film prepared by the process for preparing a polyamide-imide film are as described above.

**Embodiments for Carrying Out the Invention**

Hereinafter, the above description will be described in detail by referring to examples. However, these examples are set forth to illustrate the present invention, and the scope of the present invention is not limited thereto.

**<Example 1>**

A temperature-controllable reactor was charged with dimethylacetamide (DMAc) as an organic solvent under a nitrogen atmosphere at 10°C. Then, 2,2'-bis(trifluoromethyl)-4,4'-diaminobiphenyl (TFMB) as an aromatic diamine was slowly added thereto and dissolved.

Thereafter, 2,2'-bis(3,4-dicarboxyphenyl)hexafluoropropane dianhydride (6-FDA) as a dianhydride compound was slowly added thereto, and the mixture was stirred for 2 hours.

Then, as a dicarbonyl compound, terephthaloyl chloride (TPC) was added, followed by stirring for 1 hour; and isophthaloyl chloride (IPC) was added, followed by stirring for 1 hour, thereby preparing a polymer solution.

The polymer solution obtained was applied onto a support to form a gel sheet.

Thereafter, in the first thermal treatment step, the gel sheet was thermally treated at a temperature of 140°C for 15 minutes to dry the gel sheet. In the first cooling step, it was cooled at a temperature of 35°C for 5 minutes. Subsequently, the gel sheet was treated with hot air at a temperature of 275°C for 5 minutes as the second thermal treatment step. In the third thermal treatment step, it passed through IR heaters while the temperature was adjusted such that the temperature measured by the temperature sensor in the thermal treatment section was 280°C. Subsequently, it was cooled at a temperature of 100°C for 3 minutes in the second cooling step and cooled at a temperature of 30°C for 3 minutes in the third cooling step to obtain a polyamide-imide film having a thickness of 50 μm.

The specific composition and molar ratio of the polyamide-imide-based polymer are described in the Preparation Examples of Table 1 below.

**<Examples 2 and 3 and Comparative Examples 1 to 3>**

Films were each prepared in the same manner as in Example 1, except that the composition and molar ratio of the polymer, the temperature and time of the respective thermal treatment steps and cooling steps in the thermal treatment of the gel sheet, and the like were changed as shown in Tables 1 and 2 below.

**<Preparation Example> Composition of a polymer**

[Table 1]

| | | Prep. Ex. 1 | Prep. Ex. 2 | Prep. Ex. 3 |
|---|---|---|---|---|
| Polymerization ratio of the polyamide-imide-based polymer | Diamine compound (molar ratio) | TFMB 100 | TFMB 100 | TFMB 100 |
| | Dianhydride compound (molar ratio) | 6FDA 10 | 6FDA 10<br>BPDA 10 | 6FDA 20<br>BPDA 20 |
| | Dicarbonyl compound (molar ratio) | TPC 70<br>IPC 20 | TPC 80 | TPC 60 |

[Table 2]

| | Compositi on | Thermal treatment of a gel sheet | | | | | | | | | | | |
|---|---|---|---|---|---|---|---|---|---|---|---|---|---|
| | | First thermal treatment step | | First cooling step | | Second thermal treatment step | | Third thermal treatment step | | Second I cooling step | | Third cooling step | |
| | | Temp. (°C) | Time (min.) | Temp. (°C) | Time (min.) | Temp. (°C) | Time (min.) | Temp. (°C) | Time (min.) | Temp. (°C) | Time (min.) | Temp. (°C) | Time (min.) |
| Ex. 1 | Prep. Ex. 1 | 140 | 15 | 35 | 5 | 275 | 5 | 280 | 5 | 100 | 3 | 30 | 3 |
| Ex. 2 | Prep. Ex. 2 | 130 | 15 | 30 | 5 | 260 | 5 | 275 | 5 | 80 | 3 | 30 | 3 |
| Ex. 3 | Prep. Ex. 3 | 120 | 15 | 35 | 5 | 250 | 5 | 280 | 5 | 80 | 3 | 25 | 3 |
| C. Ex. 1 | Prep. Ex. 1 | 115 | 15 | 15 | 5 | 240 | 5 | 270 | 5 | Absent | | Absent | |
| C. Ex. 2 | Prep. Ex. 2 | 115 | 15 | 10 | 5 | 240 | 5 | 270 | 5 | 80 | 3 | Absent | |
| C. Ex. 3 | Prep. Ex. 3 | 115 | 15 | 15 | 5 | 240 | 5 | 270 | 5 | Absent | | 25 | 3 |

**<Evaluation Example>**

The films prepared in the Examples and Comparative Examples were each measured and evaluated for the following properties. The results are shown in Table 3 below.

Evaluation Example 1: Measurement of film thickness

The thickness was measured at 5 random points using a digital micrometer 547-401 manufactured by Mitutoyo Corporation. Their average value was adopted as the thickness.

Evaluation Example 2: Measurement of transmittance and haze

The light transmittance and haze were measured using a haze meter NDH-5000W manufactured by Nippon Denshoku Kogyo in accordance with the JIS K 7136 standard.

Evaluation Example 3: Measurement of yellow index

The yellow index (YI) was measured with a spectrophotometer (UltraScan PRO, Hunter Associates Laboratory) under the conditions of d65 and 10° in accordance with the ASTM-E313 standard.

Evaluation Example 4: Measurement of modulus

A sample was cut out by at least 10 cm in the direction perpendicular to the main shrinkage direction of the film and by 10 mm in the main shrinkage direction. It was fixed by the clips disposed at an interval of 10 cm in a universal testing machine UTM 5566A of Instron. A stress-strain curve was obtained until the sample was fractured while it was stretched at a speed of 10 mm/minute at room temperature. The slope of the load with respect to the initial strain on the stress-strain curve was taken as the modulus (GPa).

Evaluation Example 5: Measurement of surface tension

The surface tension of the air side and that of the belt side of each film were measured in accordance with the German industrial standard (DIN 55660) using a Mobile Surface Analyzer from Kruss, Germany.

Evaluation Example 6: TGA analysis of films

The TGA analysis was carried out using a thermal gravimetric analysis Q500 model of TA by taking 2 g of a measurement sample of a polyamide-imide-based film and heating it at a rate of 10°C/minute in the range of 25°C to 700°C.

The first weight loss temperature (Tw) refers to the temperature at which the weight loss change rate is the largest in the temperature range of 270°C to 330°C. In a graph of weight loss change rate (y-axis) with respect to temperature (x-axis), when a straight line was drawn to connect the point corresponding to the temperature of (Tw - 30)°C and the point corresponding to the temperature of (Tw + 30)°C, the area of the section in which the first weight loss temperature (Tw) was present among the areas between the straight line and the graph was taken as the TGA weight loss area value (TDA).

In addition, the 1% weight loss temperature (Tdl) and the 5% weight loss temperature (Td5) each refer to the temperature at which 1% weight loss occurs and the temperature at which 5% weight loss occurs.

Evaluation Example 7: Measurement of adhesion of a hard coating layer

A polyester-based resin (PLASCOAT 446, GOO Chemical, Japan) and a polyurethane-based resin (solids content 28% by weight, H-15, DKS Co. Ltd., Japan) were mixed at a weight ratio of 7:3 (weight ratio of solids content), and a mixed solvent of water ($H_2O$) and isopropyl alcohol (IPA) at a weight ratio of 85:15 was compounded therewith, followed by stirring thereof at room temperature for 30 minutes to prepare a primer layer composition.

In addition, 54.32 parts by weight of a urethane acrylate oligomer (PU2050, Miwon Specialty Chemical), 23.28 parts by weight of a multifunctional acrylate monomer (M300, Miwon Specialty Chemical), 19.4 parts by weight of a silica sol (MA-ST, Nissan Chemical) in which fine silica particles having an average particle diameter of 10 to 15 nm were dispersed in methanol in 30% by weight, and 3 parts by weight of a photoinitiator (1-184, BASF) were mixed to prepare a hard coating layer composition.

The primer layer composition was applied onto a polyamide-imide film sample to form a primer layer with a

thickness of 0.1 μm, and the hard coating layer composition was applied onto the primer layer to form a hard coating layer with a thickness of 5 μm.

Thereafter, the adhesive strength between the film sample and the hard coating layer was evaluated by a cross-cut test. According to the ASTM D3359 standard (Method B), the surface of the hard coating layer was cut in a grid shape in regular intervals, an adhesive tape (Nitto Tape 50B) was attached and then detached, and the degree of detachment of grid units from the surface was evaluated. It was graded from 0B to 5B according to the following criteria, and 5B was evaluated as the best (see Fig. 6).

- 5B: the cut surface was clean, and the square of grids was not detached (0% of the grid area)
- 4B: small pieces of coating were detached at intersections (less than 5% of the grid area)
- 3B: small pieces of coating were detached along the edges and at cut-off intersections (5-15% of the grid area)
- 2B: the cut edge of coating and a part of the rectangle were detached (15-35% of the grid area)
- 1B: the coating was largely peeled off along the edge of the cut surface, and the squares were detached (35-65% of the grid area)
- 0B: the coating was peeled off, and the degree of detachment of the squares became more severe (greater than 65% of the grid area)

Evaluation Example 8: Evaluation of solvent resistance

A film sample (5 cm × 15 cm) was immersed in a solvent for 5 seconds, dried at 80°C for 3 minutes, and measured for the haze again by the method according to Evaluation Example 2 above. The smaller the change in haze, the better the solvent resistance. MIBK or IPA was used as the solvent.

[Table 3]

| | Evaluation Example | | | | | | | | | | | | | |
|---|---|---|---|---|---|---|---|---|---|---|---|---|---|---|
| | Thickness (μm) | TT (%) | Haze (%) | YI | Modulus (GPa) | Surface tension (dyn/cm) | | Weight loss temp. | | First weight loss temp. $T_W$ (°C) | TGA weight loss area value | Adhesive strength of hard coatin P coating layer | Solvent resistance (ΔHz) | |
| | | | | | | Air side | Belt side | Td1 (°C) | Td5 (°C) | | TDA (%·min/ °C) | | MIB K | IPA |
| Ex. 1 | 50 | 88.8 | 0.42 | 3.6 | 6.7 | 49 | 47.6 | 330 | 435 | 298.4 | 0.00106 | 5B | 0.1 | 0.05 |
| Ex. 2 | 50 | 88.9 | 0.38 | 3.33 | 6.7 | 47 | 49 | 313 | 432 | 300 | 0.00164 | 5B | 0.08 | 0.02 |
| Ex. 3 | 50 | 88.7 | 0.48 | 3.25 | 6.8 | 48.6 | 47.8 | 338 | 438 | 307.9 | 0.00211 | 5B | 0.07 | 0.08 |
| C. Ex. 1 | 50 | 88.6 | 0.61 | 2.84 | 6.6 | 47.5 | 48.5 | 294 | 429 | 291 | 0.01713 | 4B | 0.25 | 0.13 |
| C. Ex. 2 | 50 | 88.6 | 0.52 | 3.9 | 6.7 | 46 | 48.3 | 316 | 433 | 297 | 0.01475 | 3B | 0.31 | 0.15 |
| C. Ex. 3 | 50 | 88.4 | 0.47 | 4.1 | 6.6 | 47.5 | 48.5 | 285 | 430 | 283.6 | 0.01533 | 4B | 0.28 | 0.09 |

Referring to Tables 2 and 3, in the films of the Examples in which the weight loss area value (TDA) was adjusted to 0.01% min/°C or less, they were excellent in optical properties such as transmittance, haze, and yellow index, and mechanical properties such as modulus, as well as adhesion to a hard coating layer. The change in haze after immersion in a solvent commonly used in post-processing was a certain level or below, indicating excellent solvent resistance.

**Explanation of Reference Numerals**

| | | | |
|---|---|---|---|
| 100: | polyamide-imide-based film | | |
| 101: | first side | 102: | second side |
| 200: | functional layer | 300: | cover window |
| 400: | display unit | 500: | adhesive layer |

**Claims**

1. A polyamide-imide-based film, which has a TGA weight loss area value (TDA) of 0.01%·min/°C or less.

2. The polyamide-imide-based film of claim 1, wherein the first weight loss temperature (Tw) of the film in a TGA analysis is 290°C or higher.

3. The polyamide-imide-based film of claim 1, wherein the 1% weight loss temperature (Tdl) of the film in a TGA analysis is 300°C or higher.

4. The polyamide-imide-based film of claim 1, wherein the 5% weight loss temperature (Td5) of the film in a TGA analysis is 420°C or higher.

5. The polyamide-imide-based film of claim 1, wherein the film has an adhesion to a hard coating layer of 5B.

6. The polyamide-imide-based film of claim 1, wherein when the film is immersed in an MIBK solvent for 5 seconds, dried at 80°C for 3 minutes, and then measured for haze, the change in haze ($\Delta Hz_M$) is 0.2% or less.

7. The polyamide-imide-based film of claim 1, wherein when the film is immersed in an IPA solvent for 5 seconds, dried at 80°C for 3 minutes, and then measured for haze, the change in haze ($\Delta Hz_I$) is 0.1% or less.

8. The polyamide-imide-based film of claim 1, wherein the film comprises a polyamide-imide-based polymer, and the polyamide-imide-based polymer comprises an imide-based repeat unit and an amide-based repeat unit at a molar ratio of 2:98 to 70:30.

9. The polyamide-imide-based film of claim 1, wherein the film has a surface tension of a first side of 40 dyn/cm or more.

10. The polyamide-imide-based film of claim 1, which, based on a thickness of the film of 50 μm, has a modulus of 5 GPa or more, a transmittance of 80% or more, a haze of 1% or less, and a yellow index of 5 or less.

11. A cover window for a display device, which comprises a polyamide-imide-based film and a functional layer, wherein the polyamide-imide-based film has a TGA weight loss area value of 0.01% min/°C or less.

12. A display device, which comprises a display unit; and a cover window disposed on the display unit, wherein the cover window comprises a polyamide-imide-based film and a functional layer, and the polyamide-imide-based film has a TGA weight loss area value of 0.01% min/°C or less.

13. A process for preparing the polyamide-imide-based film of claim 1, which comprises:

    polymerizing a diamine compound, a dianhydride compound, and a dicarbonyl compound in an organic solvent to prepare a polyamide-imide-based polymer solution;
    casting the solution to prepare a gel sheet; and

thermally treating the gel sheet.

**14.** The process for preparing the polyamide-based film according to claim 13, wherein the step of thermally treating the gel sheet comprises a first thermal treatment step, a first cooling step, a second thermal treatment step, a third thermal treatment step, a second cooling step, and a third cooling step, which are sequentially carried out.

Fig. 1

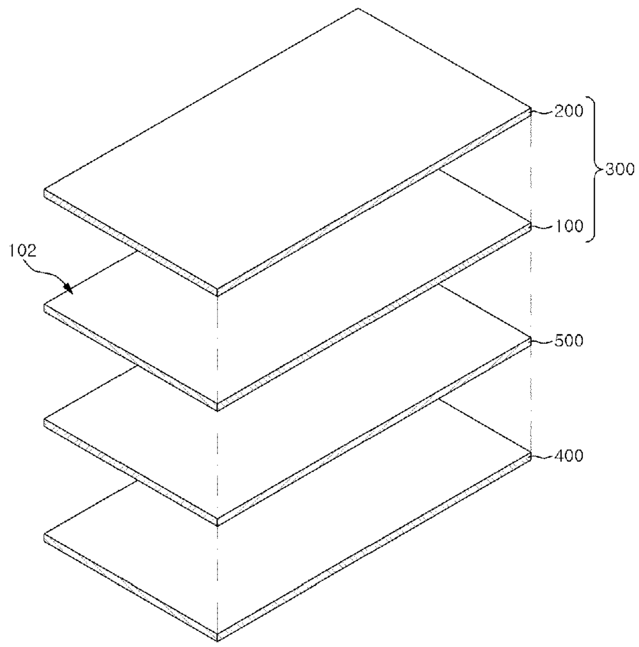


Fig. 2

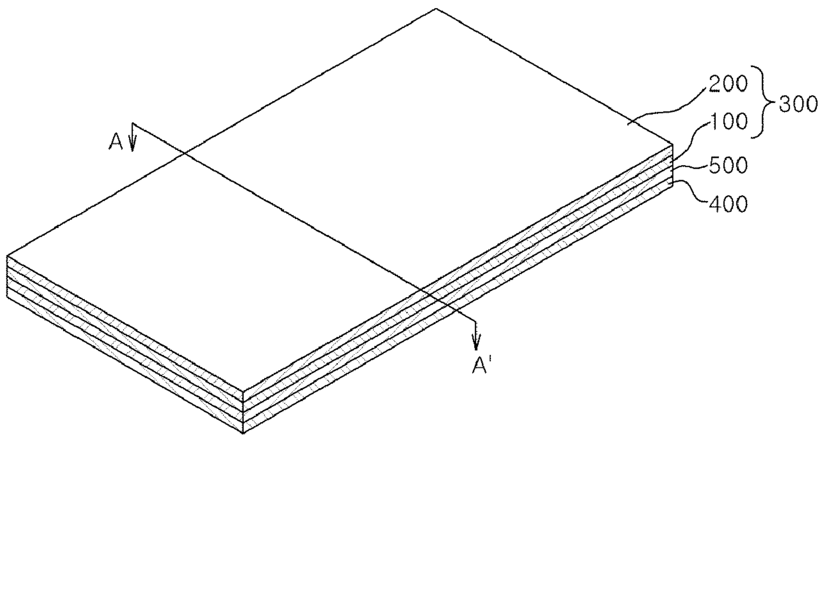

Fig. 3

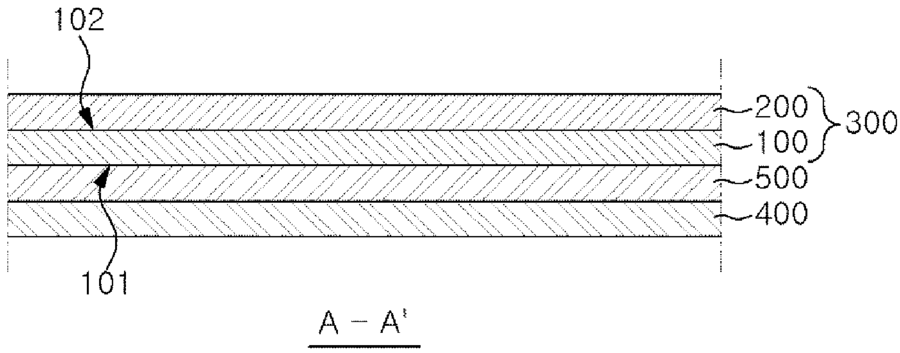
102
200
100
300
500
400
101
A - A'

Fig. 4

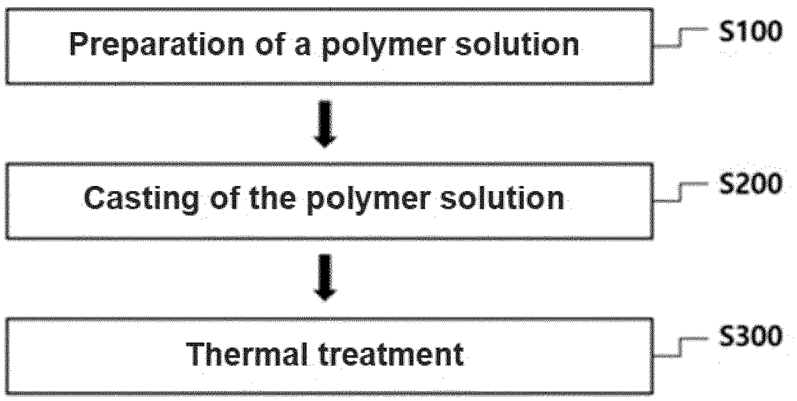
Preparation of a polymer solution
S100
Casting of the polymer solution
S200
Thermal treatment
S300

Fig. 5

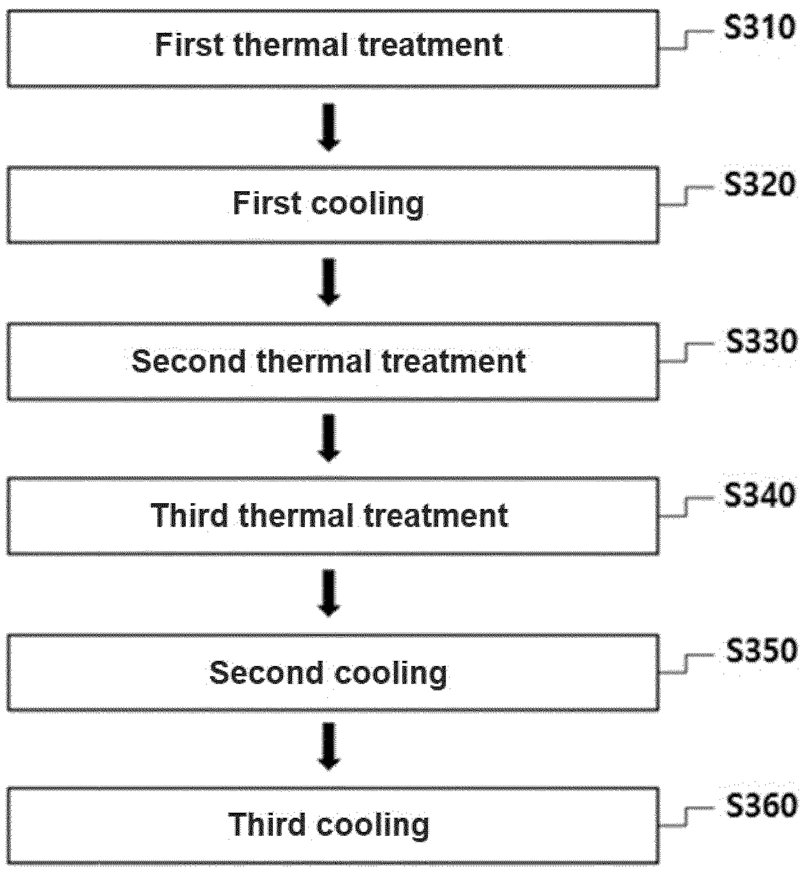
First thermal treatment
S310
First cooling
S320
Second thermal treatment
S330
Third thermal treatment
S340
Second cooling
S350
Third cooling
S360

Fig. 6

| | | |
|---|---|---|
| 5B | 0% | 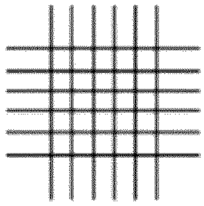 |
| 4B | < 5% | 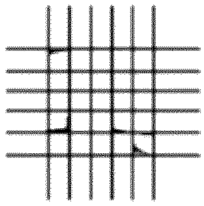 |
| 3B | 5-15% | 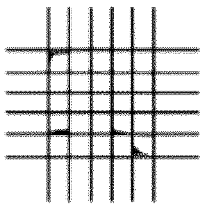 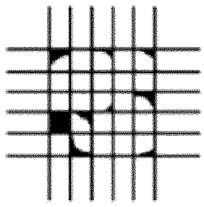 |
| 2B | 15-35% | 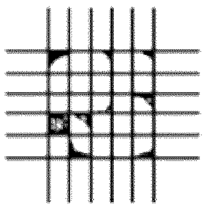 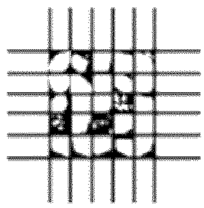 |
| 1B | 35-65% | 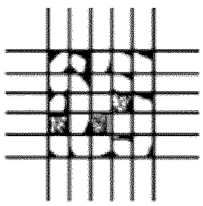 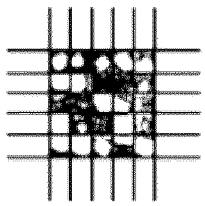 |
| 0B | > 65% | 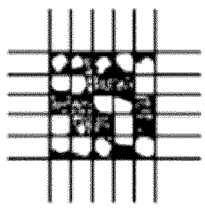 |

Europäisches Patentamt
European Patent Office
Office européen des brevets

# EUROPEAN SEARCH REPORT

Application Number
EP 23 20 7524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 194 489 A1 (SKC CO LTD [KR]) 14 June 2023 (2023-06-14) * paragraphs [0185] - [0205], [0247] - [0282], [0291] - [0297], [0295]; claims 1, 5, 6, 10-14; examples 1-3; tables 1, 4, 5 * | 1-13 | INV. C08J5/18 C08G73/10 C08G73/14 C08L79/08 |
| A | US 2020/407521 A1 (OH DAE SEONG [KR] ET AL) 31 December 2020 (2020-12-31) * paragraphs [0237] - [0243], [0248] - [0254], [0265] - [0268]; claims 1,7-11; examples 1-3; table 1 * | 1-14 | |

TECHNICAL FIELDS SEARCHED (IPC)

C08J
C09J
C08G
C08L

The present search report has been drawn up for all claims

1

| Place of search | Date of completion of the search | Examiner |
|---|---|---|
| Munich | 28 March 2024 | Fischer, Viktor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 20 7524

This annex lists the patent family members relating to the patent documents cited in the above-mentioned European search report. The members are as contained in the European Patent Office EDP file on
The European Patent Office is in no way liable for these particulars which are merely given for the purpose of information.

28-03-2024

| Patent document cited in search report | Publication date | Patent family member(s) | Publication date |
|---|---|---|---|
| EP 4194489 A1 | 14-06-2023 | CN 116253996 A | 13-06-2023 |
| | | EP 4194489 A1 | 14-06-2023 |
| | | JP 2023086669 A | 22-06-2023 |
| | | TW 202323408 A | 16-06-2023 |
| | | US 2023183424 A1 | 15-06-2023 |
| US 2020407521 A1 | 31-12-2020 | CN 112225898 A | 15-01-2021 |
| | | US 2020407521 A1 | 31-12-2020 |

EPO FORM P0459

For more details about this annex : see Official Journal of the European Patent Office, No. 12/82